# EUROPEAN PATENT APPLICATION

(11) **EP 3 531 212 A1**
(43) Date of publication of application: **28.08.2019**
(21) Application number: 19157620.6
(22) Date of filing: 18.02.2019
(51) Int. Cl.: G03G 15/20, G03G 15/22, B33Y 10/00, B33Y 30/00, B29C 64/393

(54) **FABRICATING APPARATUS, FABRICATING METHOD, AND FABRICATING SYSTEM**

(30) Priority: 22.02.2018 JP 2018029764
(71) Applicant: Ricoh Company, Ltd., Tokyo 143-8555 (JP)
(72) Inventor: TAKEYAMA, Yoshinobu, Tokyo, 143-8555 (JP); ARAO, Tsuyoshi, Tokyo, 143-8555 (JP); ITO, Yoichi, Tokyo, 143-8555 (JP); TAKAI, Atsushi, Tokyo, 143-8555 (JP); AKIEDA, Tomomi, Tokyo, 143-8555 (JP)
(74) Representative: SSM Sandmair

(57) **Abstract**

A fabricating apparatus (1) includes a heater (20), a discharger (10), and a heating controller (110). The heater (20) is configured to heat a first fabrication material layer formed of a fabrication material. The discharger (10) is configured to discharge a molten fabrication material onto the first fabrication material layer heated by the heater (20), to stack a second fabrication material layer on the first fabrication material layer. The heating controller (110) is configured to control a heating of the heater (20) according to shape data so that the first fabrication material layer does not exceed a threshold temperature defined by the fabrication material when the heater (20) heats the first fabrication material layer.

## Description

### BACKGROUND

### Technical field

Aspects of the present disclosure relate to a fabricating apparatus, a fabricating method, and a fabricating system.

### Related Art

A three-dimensional (3D) printer is becoming widespread as a device capable of producing many types of fabrication objects in small quantities without using dies or the like. In recent years, a 3D printer using a fused filament fabrication method (hereinafter, abbreviated as a FFF method) has been achieving lower price, shifting into a consumer-oriented product field.

In such a 3D printer, a technique for preventing degradation in strength in a stacking direction of three-dimensional fabrication object is currently examined. For example, JP-2005-335380-A has disclosed a technique aimed at providing a molten resin extrusion stacking technique capable of sufficiently achieving inter-layer welding strength. JP-2005-335380-A discloses an apparatus in which a molten resin extrusion stacking device forms multiple layers while extruding a molten resin, the apparatus including a discharge unit to extrude a molten resin, a heating unit to heat the resin material already extruded, and a controller to control operation of the discharge unit and the heating unit. The controller controls the heating unit to heat the resin material forming the layer of the preceding stage when extruding molten resin from the discharge unit to form a layer of a certain stage.

However, the background art is insufficient in that there is a possibility that the temperature of the fabrication material becomes too high at the time of heating the fabrication material to increase the adhesion between the fabrication material layers, leading to degradation of the fabrication quality.

### SUMMARY

In an aspect of the present disclosure, there is provided a fabricating apparatus that includes a heater, a discharger, and a heating controller. The heater is configured to heat a first fabrication material layer formed of a fabrication material. The discharger is configured to discharge a molten fabrication material onto the first fabrication material layer heated by the heater, to stack a second fabrication material layer on the first fabrication material layer. The heating controller is configured to control a heating of the heater according to shape data so that the first fabrication material layer does not exceed a threshold temperature defined by the fabrication material when the heater heats the first fabrication material layer.

In another aspect of the present disclosure, there is provided a fabrication system that includes the fabricating apparatus.

In still another aspect of the present disclosure, there is provided a fabricating method to be executed by a fabricating apparatus. The fabricating method includes preparing, heating, and discharging. The preparing prepares, with the fabricating apparatus, a first fabrication material layer formed of a fabrication material. The heating heats the first fabrication material layer with the fabricating apparatus. The discharging discharges, with the fabricating apparatus, a molten fabrication material to the first fabrication material layer heated by the heating, to stack a second fabrication material layer on the first fabrication material layer. The heating includes controlling, with the fabricating apparatus, the heating according to shape data so that the first fabrication material layer does not exceed a threshold temperature defined by the fabrication material.

The above configuration makes it possible to prevent degradation of fabrication quality and enhance adhesion between fabrication material layers, while preventing deterioration of visibility of the fabrication object.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIG. 1 is a schematic view illustrating a configuration of a three-dimensional fabricating apparatus according to an embodiment;
FIG. 2 is a schematic view illustrating a cross section of a discharge module in the three-dimensional fabricating apparatus of FIG. 1;
FIG. 3 is a hardware configuration diagram of a three-dimensional fabricating apparatus according to an embodiment;
FIG. 4 is a schematic view illustrating an example of operation of heating a lower layer;
FIG. 5 is a plan view of a heating module according to an embodiment, as viewed from a fabricating table side;
FIGS. 6A to 6C are schematic views each illustrating a state of a fabrication object during formation of an upper layer;
FIGS. 7A to 7C are schematic views each illustrating a state of a fabrication object during formation of an upper layer;
FIGS. 8A to 8C are schematic views each illustrating a state of a fabrication object during formation of an upper layer;
FIGS. 9A to 9C are schematic views each illustrating a state of a fabrication object during formation of an upper layer;
FIG. 10 is a schematic view illustrating an example of a reheating range in the present embodiment;
FIG. 11 is a schematic view illustrating an example of a reheating range in the present embodiment;
FIG. 12 is a functional block diagram related to remelting of a three-dimensional fabricating apparatus according to an embodiment;
FIGS. 13A and 13B are schematic diagrams illustrating a method for adjusting a heating amount in a case where a laser device is used as a heater;
FIG. 14 is a flowchart illustrating fabrication processing according to an embodiment;
FIGS. 15A and 15B are views each illustrating an example of heating an outermost surface of a three-dimensional fabrication object M in FIG. 10;
FIGS. 16A to 16C are timing charts for controlling operation of the heater by a heating controller in the present embodiment;
FIG. 17 is a schematic diagram illustrating preferable temperature conditions for reheating;
Fig. 18 is a schematic view illustrating a typical position where carbonization of a fabrication material by reheating relatively easily occurs;
FIG. 19 is a flowchart illustrating lower layer remelting processing according to one embodiment;
FIGS. 20A and 20B are timing charts illustrating a driving state of a laser light source in a case where reheating is performed along a tool path P illustrated in FIG. 18;
FIG. 21 is a flowchart illustrating lower layer remelting processing according to another embodiment;
FIG. 22 is a schematic view illustrating operation of lower layer heating in an embodiment;
FIG. 23 is a schematic view illustrating operation of lower layer heating in an embodiment;
FIG. 24 is a schematic view illustrating operation of lower layer heating in an embodiment;
FIG. 25 is a schematic view illustrating operation of lower layer heating in an embodiment;
FIGS. 26A and 26B are cross-sectional views each illustrating an example of a filament having non-uniform material composition;
FIGS. 27A and 27B are respectively cross-sectional views of a discharged material of the filament of FIGS. 26A and 26B;
FIG. 28 is a cross-sectional view of a fabrication object to be fabricated by using the filament of FIGS. 26A and 26B;
FIG. 29 is a schematic view illustrating an example of a three-dimensional fabricating apparatus having a regulating unit;
FIG. 30 is a flowchart illustrating an example of processing of regulating the direction of a filament; and
FIG. 31 is a schematic view illustrating fabrication and surface treatment operation in an embodiment.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Hereinafter, embodiments of the present disclosure will be described with reference to the drawings.

### <<< General arrangement >>>

A three-dimensional fabricating apparatus to form a three-dimensional fabrication object by the fused filament fabrication (FFF) method will be described as an embodiment of the present disclosure. The three-dimensional fabricating apparatus according to the present embodiment is not limited to the apparatus using the FFF method. The apparatus may use any method of fabricating a three-dimensional fabrication object by stacking layers on a mounting surface of a mounting table using a fabricating unit.

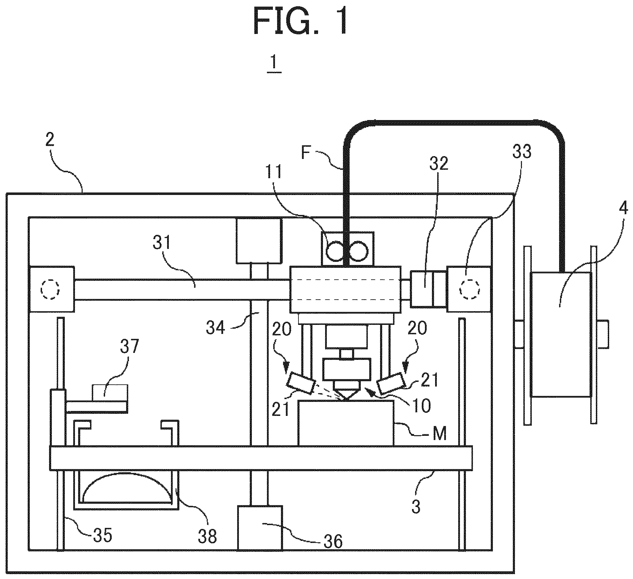

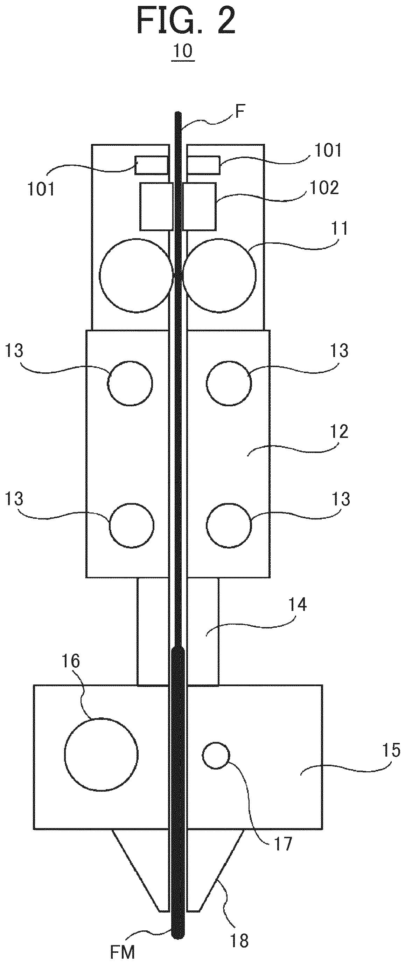

FIG. 1 is a schematic view illustrating a configuration of a three-dimensional fabricating apparatus according to an embodiment. FIG. 2 is a schematic view illustrating a cross section of a discharge module in the three-dimensional fabricating apparatus of FIG. 1. A three-dimensional fabricating apparatus 1 makes it possible to fabricate a three-dimensional fabrication object being difficult to fabricate with simple dies of injection molding or even impractical to be molded in injection molding.

The interior of the casing 2 in the three-dimensional fabricating apparatus 1 is a processing space for fabricating a three-dimensional fabrication object M. A fabricating table 3 as a mounting table is provided inside the casing 2, and the three-dimensional fabrication object M is fabricated on the fabricating table 3.

Fabrication uses a long filament F formed of a resin composition using a thermoplastic resin as a matrix. The filament F is an elongated wire-shaped solid material and is set, in a wound state, on a reel 4 located outside the casing 2 of the three-dimensional fabricating apparatus 1. The reel 4 is pulled by the rotation of an extruder 11, which is a driving unit of the filament F, to rotate without greatly exerting a resistance force.

A discharge module 10 (fabricating head) as a fabrication material discharge member is provided above the fabricating table 3 inside the casing 2. The discharge module 10 is modularized by the extruder 11, a cooling block 12, a filament guide 14, a heating block 15, a discharge nozzle 18, an imaging module 101, a torsional rotation mechanism 102, and other components. The filament F is drawn in by the extruder 11 so as to be supplied to the discharge module 10 of the three-dimensional fabricating apparatus 1.

The imaging module 101 captures a 360° image of the filament F drawn into the discharge module 10, that is, an omnidirectional image of a certain portion of the filament F. While two imaging modules are provided in the discharge module of FIG. 2, it is allowable to use a single imaging module 101 to capture a 360° image of the filament F by using a reflector, for example. An example of the imaging module 101 is a camera including: an image forming optical system such as a lens; and an imaging device such as a charge coupled device (CCD) sensor and a complementary metal oxide semiconductor (CMOS) sensor.

The torsional rotation mechanism 102 is constructed with a roller and rotates, in the width direction, the filament F drawn into the discharge module 10 to regulate the direction of the filament F. A diameter measurement unit 103 measures the width between the edges of the filaments in the two directions of the X-axis and the Y-axis from the image of the filament captured by the imaging module 101 individually as a diameter. When a diameter is detected to be outside the standard, the diameter measurement unit 103 outputs error information. The output destination of the error information may be a display, a speaker, or another device. The diameter measurement unit 103 may be a circuit or a function implemented by the processing of the central processing unit (CPU).

The heating block 15 includes: a heat source 16 such as a heater; and a thermocouple 17 for controlling the temperature of the heater. The heating block 15 heats and melts the filament F supplied to the discharge module 10 via a transfer path, and supplies the heated and molten filament F to the discharge nozzle 18.

The cooling block 12 is provided above the heating block 15. The cooling block 12 includes a cooling source 13 and cools the filaments. This configuration enables the cooling block 12 to prevent a reverse flow of a molten filament FM to an upper portion in the discharge module 10, an increase in resistance to push out the filament, or clogging in the transfer path due to solidification of the filament. There is provided a filament guide 14 between the heating block 15 and the cooling block 12.

As illustrated in FIGS. 1 and 2, the discharge nozzle 18 for discharging the filament F as a fabrication material is provided at a lower end portion of the discharge module 10. The discharge nozzle 18 discharges the molten or semi-molten filament FM supplied from the heating block 15 so as to extrude it linearly onto the fabricating table 3. The discharged filament FM is cooled and solidified to form a layer having a predetermined shape. The discharge nozzle 18 repeats the operation of linearly discharging the molten or semi-molten filament FM onto the formed layer, so as to achieve stacking of new layers. This results in formation of a three-dimensional fabrication object.

In the present embodiment, two discharge nozzles are provided in the discharge module 10. The first discharge nozzle melts and discharges the filament of a model material to constitute the three-dimensional fabrication object, while the second discharge nozzle melts and discharges the filament to be a support material. In FIG. 1, the second discharge nozzle is disposed on a deeper side of the first discharge nozzle. Note that the number of discharge nozzles is not limited to two and may be any number.

The support material discharged from the second discharge nozzle is usually a material different from the model material to constitute the three-dimensional fabrication object. The support portion formed of the support material is finally removed from the model portion formed of the model material. The filaments of the support material and the model material are individually melted in the heating block 15 and are discharged so as to be extruded from the individual discharge nozzles 18, and are sequentially stacked in layers.

The three-dimensional fabricating apparatus 1 includes a heating module 20 to heat a layer below the layer being formed by the discharge module 10. The heating module includes a laser light source 21 that emits laser. The laser light source 21 emits the laser toward a position in the lower layer, at a position being immediately before discharge of the filament FM. An example of the laser light source is a semiconductor laser with the laser emission wavelength of 445 nm, although there is no particular limitation to the laser light source.

The discharge module 10 and the heating module 20 are slidably held by a connecting member with respect to an X-axis drive shaft 31 (X-axis direction) extending in a left-right direction of the apparatus (left-right direction in FIG. 1 = the X-axis direction). The driving force of an X-axis drive motor 32 enables the discharge module 10 to move in the left-right direction (X-axis direction) of the apparatus.

The X-axis drive motor 32 is held slidably along a Y-axis drive shaft (Y-axis direction) extending in a front-back direction of the apparatus (depth direction = Y-axis direction in FIG. 1). The driving force of a Y-axis drive motor 33 moves the X-axis drive shaft 31 together with the X-axis drive motor 32 along the Y-axis direction. Along with this movement, the discharge module 10 and the heating module 20 also move in the Y-axis direction.

Meanwhile, the fabricating table 3 is penetrated by a Z-axis drive shaft 34 and a guide shaft 35 and is held movably along the Z-axis drive shaft 34 extending in an up-down direction of the apparatus (up-down direction in FIG. 1 = Z-axis direction). The driving force of a Z-axis drive motor 36 moves the fabricating table 3 in the up-down direction (Z-axis direction) of the apparatus. The fabricating table 3 may include a heater for heating the stacked fabrication object.

Continuation of melting and discharge of the filament over time might contaminate peripheral portions of the discharge nozzle 18 with molten resin in some cases. To avoid this, the three-dimensional fabricating apparatus 1 includes a cleaning brush 37 that regularly performs cleaning operation on the peripheral portions of the discharge nozzle 18 so as to prevent the resin from adhering to the distal end of the discharge nozzle 18. From the viewpoint of prevention of adhesion, it is preferable that the cleaning operation be performed before the temperature of the resin is completely lowered. In this case, the cleaning brush 37 is preferably formed of a heat resistant member. Powder resulted from polishing during the cleaning operation may be accumulated in a dust box 38 provided in the three-dimensional fabricating apparatus 1 and discarded regularly, or may be discharged to the outside through a suction path.

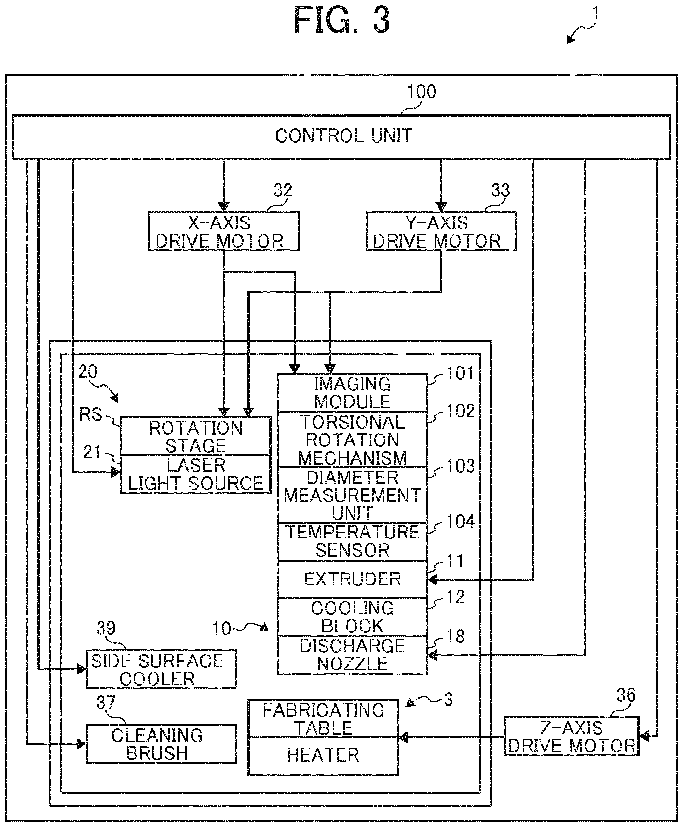

FIG. 3 is a hardware configuration diagram of a three-dimensional fabricating apparatus according to an embodiment. The three-dimensional fabricating apparatus 1 includes a control unit 100. The control unit 100 is constructed with a CPU, a circuit, or the like, and is electrically connected to each of portions as illustrated in FIG. 3.

The three-dimensional fabricating apparatus 1 includes an X-axis coordinate detection mechanism to detect the position of the discharge module 10 in the X-axis direction. The detection result of the X-axis coordinate detection mechanism is transmitted to the control unit 100. The control unit 100 controls the driving of the X-axis drive motor 32 according to the detection result, and moves the discharge module 10 to a target position in the X-axis direction.

The three-dimensional fabricating apparatus 1 includes a Y-axis coordinate detection mechanism to detect the position of the discharge module 10 in the Y-axis direction. The detection result of the Y-axis coordinate detection mechanism is transmitted to the control unit 100. The control unit 100 controls the driving of the Y-axis drive motor 33 according to the detection result, and moves the discharge module 10 to a target position in the Y-axis direction.

The three-dimensional fabricating apparatus 1 includes a Z-axis coordinate detection mechanism to detect the position of the fabricating table 3 in the Z-axis direction. The detection result of the Z-axis coordinate detection mechanism is transmitted to the control unit 100. The control unit 100 controls the driving of the Z-axis drive motor 36 according to the detection result to move the fabricating table 3 to a target position in the Z-axis direction.

In this manner, the control unit 100 controls the movement of the discharge module 10 and the fabricating table 3 to move the relative three-dimensional position of each of the discharge module 10 and the fabricating table 3 to the target three-dimensional position.

Furthermore, the control unit 100 transmits a control signal to each of drive units, namely the extruder 11, the cooling block 12, the discharge nozzle 18, the laser light source 21, the cleaning brush 37, a rotation stage RS, the imaging module 101, the torsional rotation mechanism 102, the diameter measurement unit 103, and a temperature sensor 104, so as to control driving of these units. Note that the rotation stage RS, a side surface cooler 39, the imaging module 101, the torsional rotation mechanism 102, the diameter measurement unit 103, and the temperature sensor 104 will be described below.

### << Heating method >>

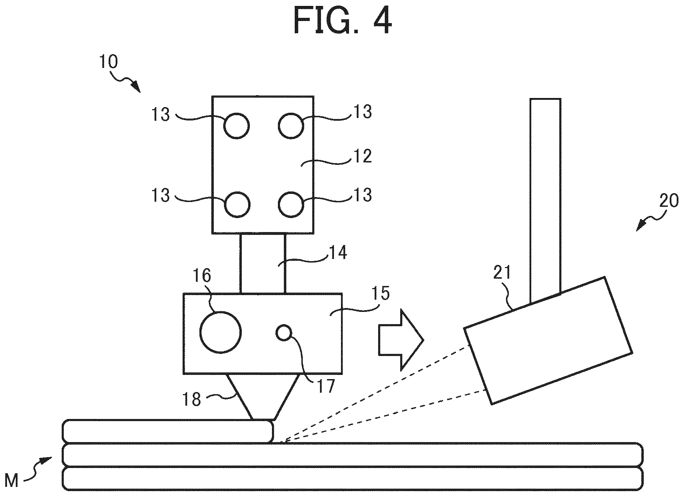

FIG. 4 is a schematic view illustrating an example of operation of heating a lower layer. Hereinafter, a method of heating using a laser will be described as one embodiment.

During the formation of an upper layer by the discharge module 10, the laser light source 21 emits laser to reheat the position being immediately before discharge of the filament FM in the lower layer. Reheating refers to heating again after the molten filament FM has cooled and solidified. The reheating temperature is not particularly limited. Still, it is preferable that the temperature is a melting temperature of the filament FM of the lower layer, or more.

The temperature of the lower layer before heating is sensed by the temperature sensor 104. The position of the temperature sensor 104 is arranged at a certain position capable of sensing the lower layer surface before heating. In the present embodiment, in FIG. 4, the temperature sensor 104 is disposed on the deeper side of the laser light source 21. The lower layer temperature before heating is sensed by the temperature sensor 104 and laser output is adjusted according to the sensing result, making it possible to reheat the lower layer to a predetermined temperature or more. Another method would be using the temperature sensor 104 to sense the lower layer temperature during reheating and performing energy input from the laser to the lower layer until the sensing result becomes a predetermined temperature or more. In this case, the position of the temperature sensor 104 is to be arranged at an arbitrary position where the heating surface can be sensed. The temperature sensor 104 to use may be any known device, either a contact type or a non-contact type.

Reheating the surface of the lower layer would reduce the temperature difference between the lower layer and the filament FM discharged onto the surface of the lower layer, and a mixture of the lower layer and the discharged filaments would enhance the adhesion in the stacking direction.

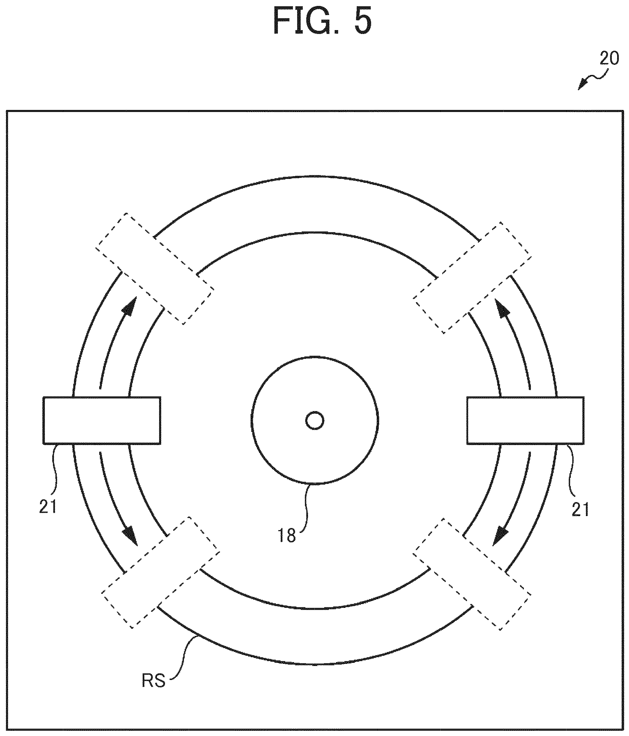

FIG. 5 is a plan view of a heating module according to an embodiment, as viewed from the fabricating table 3 side. In FIG. 5, the heating module 20 is attached to the rotation stage RS. The rotation stage RS rotates about the discharge nozzle 18. The laser light source 21 rotates in accordance with the rotation of the rotation stage RS. This configuration enables the laser light source 21 to emit the laser light to the discharge position of the discharge nozzle 18 proactively even when the movement direction of the discharge nozzle 18 changes.

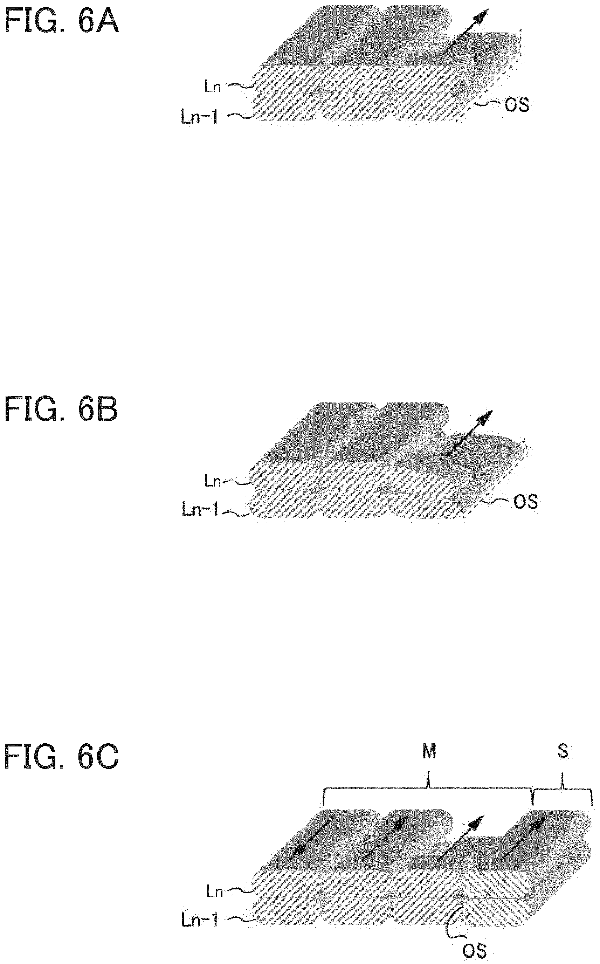

FIGS. 6A to 6C are schematic views each illustrating a state of the fabrication object at formation of an upper layer. Hereinafter, the layer being fabricated by the discharge module 10 is denoted as an upper layer Ln, the layer immediately below the layer being fabricated is denoted as a lower layer Ln-1, and the layer immediately below the lower layer Ln-1 is denoted as a lower layer Ln-2. Arrows in FIGS. 6A to 6C indicate a movement path (tool path) of the discharge module. In FIG. 6A and subsequent figures, the discharged filaments are represented by elliptic cylinders so as to indicate the tool path of the discharge module. While there are gaps illustrated between the filaments for the purpose of distinction, it is preferable, in practice, to fabricate the filaments with no gaps in consideration of strength.

FIG. 6A is a schematic view illustrating a fabrication object when an upper layer is formed without reheating the lower layer. Forming the upper layer Ln without reheating the lower layer Ln-1 leads to formation of the upper layer Ln in a state where the lower layer Ln-1 is solidified, resulting in no deformation of an outer surface OS. On the other hand, it is difficult to obtain a sufficient adhesion strength between the upper layer Ln and the lower layer Ln-1.

FIG. 6B is a schematic view illustrating a fabrication object when the upper layer is formed while reheating the lower layer. Forming the upper layer Ln while reheating the lower layer Ln-1 leads to formation of the upper layer Ln in a state where the lower layer Ln-1 is melted, resulting in deformation of the outer surface OS.

FIG. 6C is a schematic view illustrating a fabrication object when the upper layer Ln is formed while reheating the lower layer Ln-1. In the example of FIG. 6C, forming the upper layer Ln while reheating the lower layer Ln-1 of the model portion M would result in no deformation of the outer surface OS since the model portion M is supported by the support portion S.

In the present embodiment, the upper layer Ln is formed in a state where the lower layer Ln-1 is partially remelted. This promotes entanglement of the polymer between the upper layer Ln and the lower layer Ln-1, enhancing the strength of the fabrication object. In addition, appropriately setting the conditions for remelting would make it possible to achieve both the shaping accuracy and the strength in the model portion in the stacking direction. Hereinafter, a setting example of a remelting region and its effect in the present embodiment will be described.

The model material and the support material may be formed of the same material or different materials. For example, even in a case where the model portion M and the support portion S are formed of the same material, it is still possible to control the strength of their interfaces to separate the portions after fabrication.

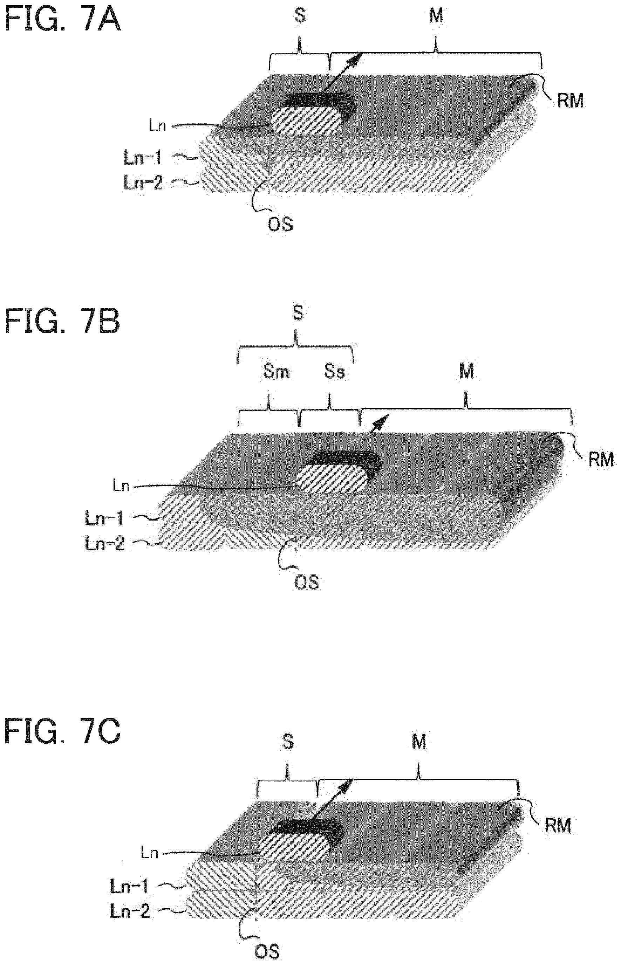

FIGS. 7A to 7C are schematic views each illustrating a state of the fabrication object at formation of an upper layer. In the fabricating method of FIG. 7A, the three-dimensional fabricating apparatus 1 reheats the surface of the model portion M in the lower layer Ln-1 and the surface of the support portion S excluding its outer peripheral portion, so as to form a remelting portion RM to form the upper layer Ln. According to this method, since the region on the outer surface OS side of the model portion M is remelted in fabrication, leading to enhancement of the adhesion between the layers and enhancement of the strength in the stacking direction. In addition, melting the outer surface OS side would suppress occurrence of detachment between the support portion S and the model portion M during fabricating, leading to enhancement of fabrication accuracy. However, excessive adhesion between the support portion S and the model portion M would lower the releasability of the support portion S after fabricating. Furthermore, mixing the support portion S to the model portion M might reduce the strength of the model portion M depending on the heating temperature. Mixing of materials can be prevented by using a method of noncontact heating of the stacked surface. In a case where contact heating is applied, it is possible to adjust the movement of the contact member or clean the contact member to prevent the mixture. The releasability of the support portion S is enhanced by using a support material different from the model material and having a melting point lower than that of the model material.

In the fabricating method of FIG. 7B, the three-dimensional fabricating apparatus 1 forms the support portion S using a model material and a support material. In this case, the three-dimensional fabricating apparatus 1 arranges a support material in a region Ss on the model portion M side of the support portion S and arranges a model material in a region Sm on the outer peripheral side of the support portion S. In this case, the three-dimensional fabricating apparatus 1 may use the model material to form the model portion M and the region Sm of the support portion S, and may subsequently cast the support material into the gaps between the model materials. Subsequently, the three-dimensional fabricating apparatus 1 forms the upper layer Ln while reheating the surface of the model portion M in the lower layer Ln-1 and the surface of the support portion S excluding its outer peripheral portion.

The fabricating method of FIG. 7B is suitable for excellent releasability of the support portion S. In addition, the fabricating method of FIG. 7B is preferable in that even in a case where the shaping accuracy of the region Ss and the strength as a structure are low, the region Sm can support the region Ss so as to be able to compensate for the shaping accuracy and strength of the region Ss.

In the fabricating method of FIG. 7C, the three-dimensional fabricating apparatus 1 forms the upper layer Ln while reheating the surface of the model portion M, excluding the vicinity of the outer surface OS. This method suppresses transmission of the heat of the model portion M to the support portion S at the time of remelting, enabling stabilization of the shape of the support portion S. The fabricating method of FIG. 7C is effective in high maintainability of the shape of the model portion M and high attainability of the releasability between the model portion M and the support portion S. With the fabricating method of FIG. 7C, however, strength in the stacking direction is lower when compared with the fabricating method of remelting the whole of the surface of the model portion M. Accordingly, the fabricating method of FIG. 7C would be effective in the case of forming a fabrication object with a strong internal structure, or in a case where fabrication accuracy and releasability have highly importance.

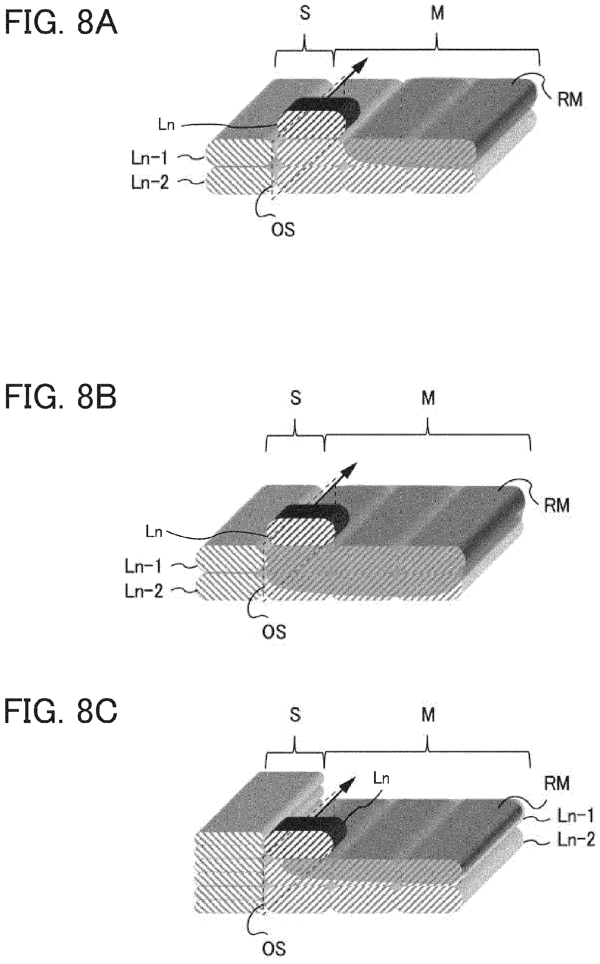

FIGS. 8A to 8C are schematic views each illustrating a state of a fabrication object during formation of an upper layer Ln. The fabricating method of FIG. 8A differs from the fabricating method of FIG. 7C in that the non-remelting region on the surface of the model portion M is expanded to a position spaced away from the outer surface OS to further reduce the remelting portion RM. The fabricating method of FIG. 8A can further stabilize the shape of the support portion S as compared with the fabricating method of FIG. 7C and thus it is more effective in that the shape of the model portion M can be maintained. On the other hand, the strength in the stacking direction in the model portion M is further reduced than the method of FIG. 7C.

The fabricating method in FIG. 8B differs from the fabricating method in FIG. 7C in that the surface of the lower layer Ln-1 is reheated to the vicinity of the outer surface OS in the model portion M. The fabricating method of FIG. 8B is effective in a case where the melting point of the support material is higher than that of the model material. According to the fabricating method of FIG. 8B, the strength in the stacking direction in the model portion M is higher than the case of the fabricating method of FIG. 7C.

In the fabricating method of FIG. 8C, the three-dimensional fabricating apparatus 1 first discharges the support material for the upper layer Ln to form the support portion S, then, remelts the model portion M of the lower layer Ln-1 to form the model portion M of the upper layer Ln. It is sufficient as long as the support portion S has a strength to keep oneself from peeling off during fabrication because it is to be finally removed after fabrication, and thus, the strength needed for the support portion S is not as high as the case of the model material. Accordingly, the material to be selected as the support material is preferably a material capable of achieving stacking with higher accuracy than the case of the model material. Forming the support portion S of the upper layer Ln in a state where the lower layer Ln-1 is solidified would enhance fabrication accuracy of the support portion S. According to the fabricating method of FIG. 8C, the support portion S and the model portion M are independently formed. This enables the three-dimensional fabricating apparatus 1 to set the stacking pitch of the support portion S to be finer than the stacking pitch of the model portion M. For example, in the configuration of FIG. 8C, the stacking pitch of the support portion is 1/2 of the stacking pitch of the model portion M. The molten model material conforms to the shape of the support portion S. Accordingly, reducing the stacking pitch of the support portion S leads to formation of the smoother outer surface OS of the model portion M. The method of FIG. 8C is preferable in a case where the support portion S can be molded with higher accuracy than the model portion M.

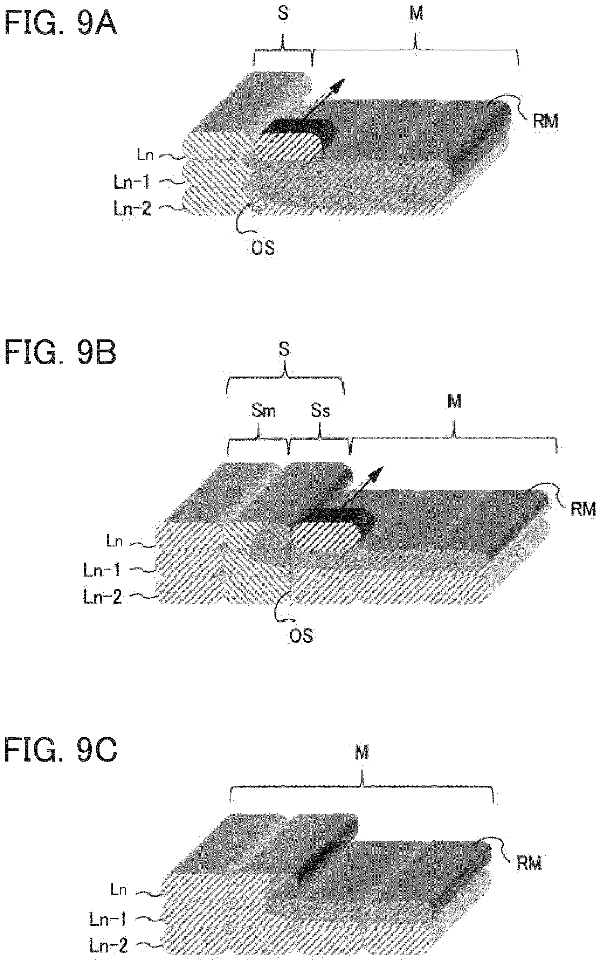

FIGS. 9A to 9C are schematic views each illustrating a state of a fabrication object during formation of an upper layer. The fabricating method of FIG. 9A differs from FIG. 8B in that the support portion S of the upper layer Ln is formed first and then the model portion M of the upper layer Ln is formed. In a case where the melting point of the support material is higher than that of the model material, the support portion S would not melt even in a case where heat is applied to the vicinity of the outer surface OS of the model portion M. According to the fabricating method of FIG. 9A, it is possible to obtain a fabrication object having excellent releasability and high strength in the stacking direction, leading to enhancement of the fabrication accuracy.

The fabricating method of FIG. 9B differs from FIG. 7B in that the support portion S of the upper layer Ln is formed first and then the model portion M of the upper layer Ln is formed. The fabricating method of FIG. 9B is advantageous in that even in a case where the shaping accuracy of the region Ss and the strength as a structure are low, the region Sm supports the region Ss so as to compensate for the shaping accuracy and structural strength of the region Ss. However, the fabricating method of FIG. 9B might deteriorate the releasability of the support portion S when the region Ss melts at the time of remelting.

The fabricating method of FIG. 9C differs from that of FIG. 8A in that the outer peripheral side of the model portion M in the upper layer Ln is formed first and then the remaining portion of the model portion M in the upper layer is formed. According to the fabricating method of FIG. 9C, since the fabricating is performed with the model portion M alone, leading to stabilized shapes and enhanced fabrication accuracy. In addition, since the side surface of the model portion M in the upper layer Ln is partially remelted during fabrication, the strength of the model portion M is enhanced.

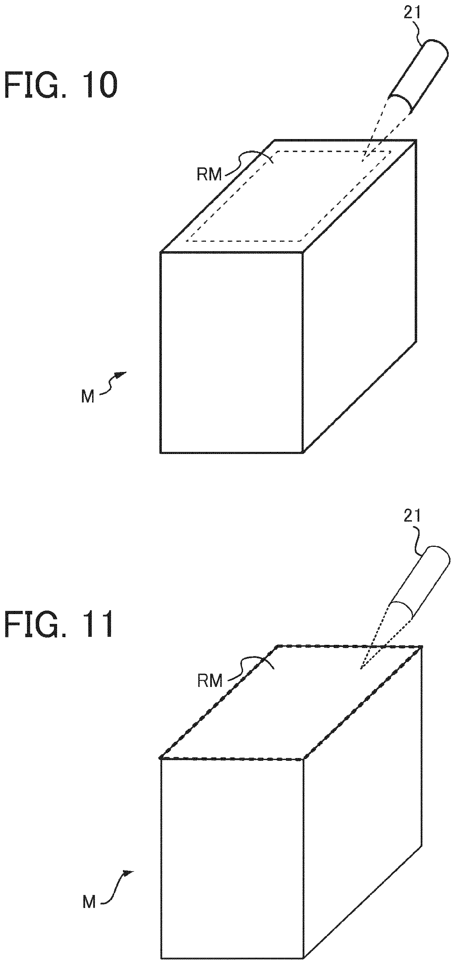

FIG. 10 is a schematic view illustrating an example of a reheating range in the present embodiment. For the purpose of maintaining the outer shape, the three-dimensional fabricating apparatus 1 intentionally narrows the remelting portion RM without reheating the outer peripheral portion of the three-dimensional fabrication object M. This leads to enhancement of adhesion between the stacked layers while maintaining the shape of the fabrication object. Note that FIG. 10 simply illustrates the shape of the fabrication object without illustrating the shape of the filament. In addition, the fabrication object illustrated in FIG. 10 is typically a model material. As illustrated in FIG. 10, the remelting portion RM is intentionally narrowed to enhance adhesion between stacked layers on the inside without deforming the outer shape of the three-dimensional fabrication object M, making it possible to maintain the fabrication quality.

On the other hand, when the remelting portion RM is intentionally narrowed as illustrated in FIG. 10, while the shape of the three-dimensional fabrication object M can be maintained, since the outer peripheral portion is not remelted, there is a possibility that enhancement of adhesion between the stacked layers in the outer peripheral portion cannot be achieved sufficiently.

FIG. 11 is a schematic view illustrating another example of the reheating range in the present embodiment. Similarly to FIG. 10, FIG. 11 simply illustrates the shape of the fabrication object without illustrating the shape of the filament. Moreover, the fabrication object illustrated in FIG. 11 is also typically a model material. In order to enhance the strength of the outer peripheral portion of the shape of the three-dimensional fabrication object M, the three-dimensional fabricating apparatus 1 reheats the three-dimensional fabrication object M including its outer periphery, making it possible to expand the remelting portion RM as much as possible. This leads to enhanced adhesion between the stacked layers including the outer peripheral portion. In this case, there is a possibility of occurrence of deformation in fabrication due to remelting of the outer peripheral portion. However, since the strength of the outer peripheral portion is enhanced, it is possible to overcome the deformation, if any, by using secondary processing.

### << Functional block >>

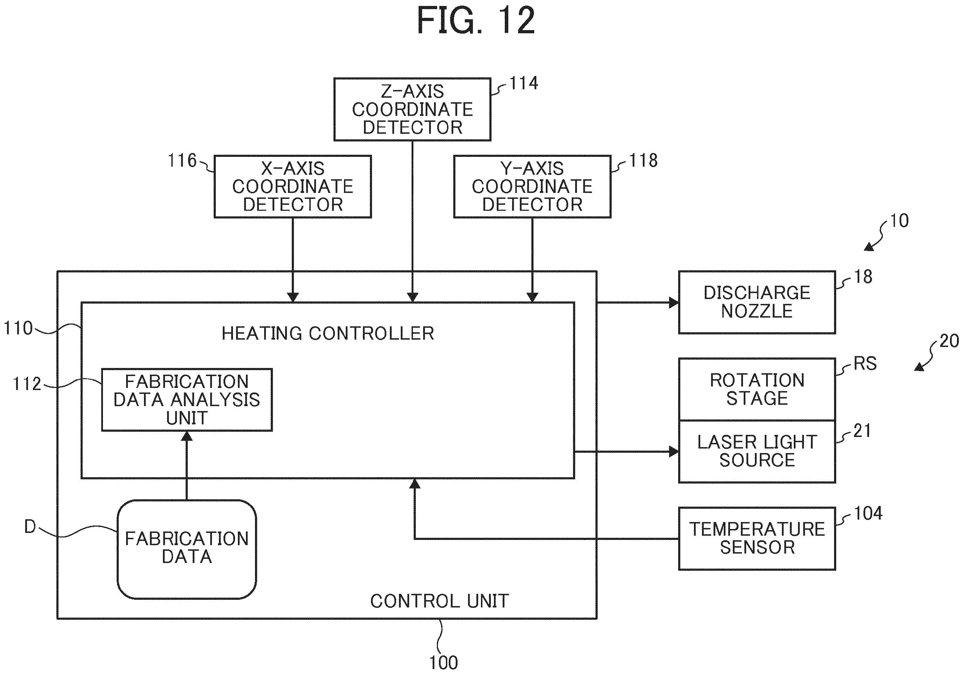

Hereinafter, the three-dimensional fabricating apparatus 1 for achieving both enhancement of stacking strength of a fabrication object and maintenance of quality of a fabrication material by setting an appropriate reheating range and reheating condition will be described in more detail with reference to FIG. 12.

FIG. 12 is a diagram illustrating functional blocks of the control unit 100 together with peripheral components. Peripheral components of the control unit 100 illustrated in FIG. 12 include: the discharge module 10 including the discharge nozzle 18; the heating module 20 including the rotation stage RS and the laser light source 21; a Z-axis coordinate detector 114; an X-axis coordinate detector 116; and a Y-axis coordinate detector 118.

The Z-axis coordinate detector 114 is the above-described Z-axis coordinate detection mechanism that detects the position of the fabricating table 3 in the Z-axis direction. The X-axis coordinate detector 116 and the Y-axis coordinate detector 118 are the above-described X-axis and Y-axis coordinate detection mechanisms for detecting the positions of the discharge module 10 and the heating module 20 in the X-axis direction and the Y-axis direction, respectively. Individual detection results of the Z-axis coordinate detector 114, the X-axis coordinate detector 116, and the Y-axis coordinate detector 118 are transmitted to the control unit 100.

According to these detection results, the control unit 100 controls the driving of the Z-axis drive motor 36, the X-axis drive motor 32, and the Y-axis drive motor 33 so as to move relative three-dimensional positions of the discharge module 10 and the heating module 20 and the fabricating table 3 to the target three-dimensional positions. Subsequently, the control unit 100 causes the discharge nozzle 18 to discharge the molten filament FM at a target three-dimensional position according to the input data of a solid model.

The control unit 100 according to the present embodiment includes a heating controller 110. The heating controller 110 controls reheating of a fabrication material layer performed by the heating module 20 at the time of discharge of the filament FM. In reheating, the heating controller 110 emits laser light from the laser light source 21 of the heating module 20 so as to reheat the lower layer Ln-1 below the upper layer Ln being fabricated. As described with reference to FIG. 5, the following description will be continued on the assumption that the laser light source 21 rotates together with the rotation stage RS to emit laser light to a predetermined position being immediately before discharge of the filament FM in the lower layer, proactively to the discharge position of the discharge nozzle 18.

The heating controller 110 includes a fabrication data analysis unit 112 that performs data analysis on an input solid model. Here, the solid model data includes image data of each of layers when the solid model is sliced at predetermined intervals. The image data of each of the layers will be referred to as fabrication data D. The fabrication data analysis unit 112 analyzes the fabrication data D for each of layers and appropriately determines a range (reheating range) of reheating in the lower layer Ln-1 with respect to the upper layer Ln being formed and a condition (reheating condition) on each of positional coordinates at reheating within the reheating range.

The reheating range and the reheating condition can be determined according to fabrication data of the uppermost layer (lower layer Ln-1) the fabrication of which has been completed and the fabrication data of the lowermost layer (upper layer Ln) among the layers the fabrication of which has not been completed. The reheating range and the reheating condition may preferably be determined in consideration of the fabrication data of one or more lower layers (Ln-2, Ln-3...) below the lower layer Ln-1. As described above, the region where the upper layer Ln is formed on the lower layer Ln-1 is determined as the reheating range, excluding the outer peripheral portion or including the outer peripheral portion. Instead of fabrication data of the layer (Ln-1,...) the fabrication of which has been completed, shape measurement data obtained by three-dimensionally measuring the fabricated structure may be used.

After the reheating range and the reheating condition are determined by the fabrication data analysis unit 112, the heating controller 110 adjusts the output of the laser light source 21 in accordance with the relative position coordinates of the heating module 20 with respect to the fabricating table 3 (a predetermined position to be heated by the heating module 20 is determined according to these coordinates). Adjustment of output of the laser light source 21 makes it possible to reheat the lower layer within a predetermined temperature range.

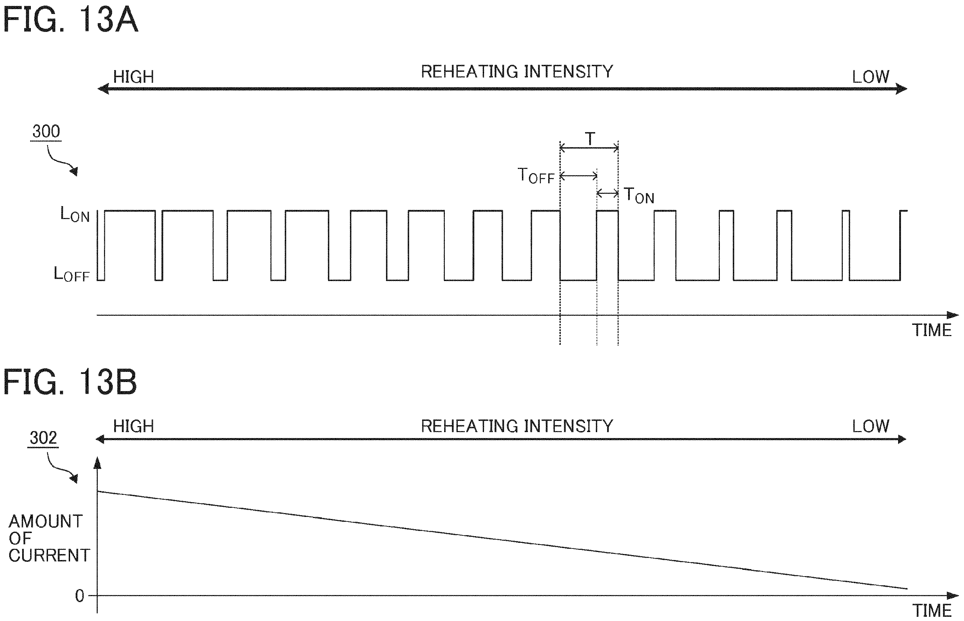

FIGS. 13A and 13B are schematic diagrams illustrating a method for adjusting the output (heating amount) of the laser light source 21 in a case where the laser device is used as a heater. In a specific embodiment in which the fabrication material layer is heated by light energy using a laser device, the heating controller 110 can change one or both of the drive time of the laser light source 21 per unit time and the drive current of the laser light source 21 so as to control the heating amount by the laser light source 21.

The drive time control of controlling the drive time per unit time as schematically illustrated in a chart 300 controls a laser light turn-on timing T_{ON} and a laser light turn-off timing T_{OFF} so as to adjust a ratio of laser light illumination substantially on-time for the lower layer (T_{ON} / T; T = T_{ON} + T_{OFF}) per unit time. Increasing the ratio (duty ratio) of the emission time per unit time would increases the heating amount. This drive time control is generally referred to as pulse width modulation (PWM). In the drive time control, even with an identical drive current for the laser, the heating amount can be controlled by changing the emission time per unit time.

In the drive current control of controlling the drive current of the laser light source 21, as schematically illustrated by a chart 302, the light amount of the laser light is adjusted by adjusting the current value for driving the laser. Increasing the drive current would increase the heating amount. While the drive current control enables control of the heating amount by controlling the drive current even with an identical duty ratio, the drive current control and the drive time control may be applied in combination.

Here, referring to FIG. 12 again. FIG. 12 further illustrates the temperature sensor 104 as a peripheral component of the control unit 100. The temperature sensor 104 measures the temperature of a site to be reheated in the lower layer Ln-1.

In a particular embodiment, the temperature sensor 104 can measure the lower layer temperature before heating. In this case, the heating controller 110 can further adjust the output of the laser according to the measurement value of the lower layer temperature before heating measured by the temperature sensor 104 so as to be able to further control the reheating of the lower layer with higher accuracy. For example, in a case where the lower layer temperature before heating is relatively low, the heating amount is corrected to a larger side to suppress the temperature drop to a level below a lower limit of a predetermined temperature range. In a case where the lower layer temperature before heating is relatively high, the heating amount is corrected to a smaller side to suppress the temperature rise to a level above an upper limit of a predetermined temperature range.

In another particular embodiment, the temperature sensor 104 can measure the lower layer temperature during reheating. The heating controller 110 inputs energy from the laser light source 21 to the lower layer according to the measurement value of the lower layer temperature during heating measured by the temperature sensor 104, making it possible to reheat the lower layer so as to control the temperature to be within a predetermined temperature range. For example, in a case where the temperature of the lower layer during heating is lower than a target temperature, the heating amount is increased to bring the temperature closer to the target temperature; in a case where the temperature of the lower layer during heating is higher than the target temperature, the heating amount is decreased to bring the temperature closer to the target temperature. This type of temperature sensor 104 for measuring the lower layer temperature during heating can be implemented, for example, by a thermographic camera or the like.

### << Processing and Operation >>

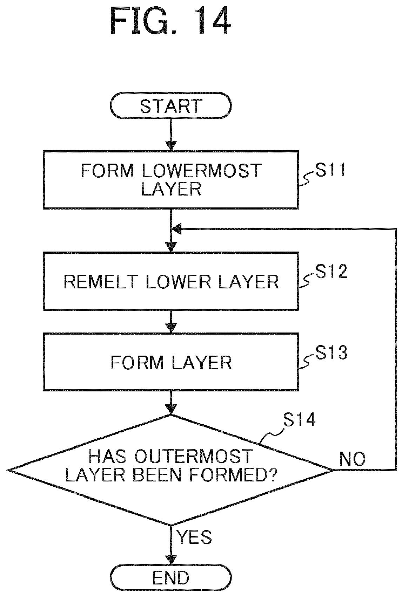

Subsequently, processing and operation of the three-dimensional fabricating apparatus 1 in one embodiment will be described. FIG. 14 is a flowchart illustrating a fabrication processing according to an embodiment.

The control unit 100 of the three-dimensional fabricating apparatus 1 receives input of solid model data. The data of the solid model data is constructed by image data of each of layers when the solid model is sliced at predetermined intervals.

The control unit 100 of the three-dimensional fabricating apparatus 1 drives the X-axis drive motor 32 or the Y-axis drive motor 33 to move the discharge module 10 in the X-axis direction or the Y-axis direction. During the movement of the discharge module 10, the control unit 100 causes the melted state or semi-molten filament FM to be discharged from the discharge nozzle 18 to the fabricating table 3 according to the image data of the lowermost layer among the input solid model data. With this configuration, the three-dimensional fabricating apparatus 1 forms a layer having a shape based on the image data on the fabricating table 3 (step S11).

During the movement of the discharge module 10, the control unit 100 causes laser to be emitted from the laser light source 21 according to the image data of the lowermost layer among the fabrication incomplete layers, out of the input solid model data. As a result, the laser irradiation position in the lower layer is remelted (step S12). Note that the control unit 100 may cause the laser to be emitted to the inside of the range indicated by the image data as illustrated in the fabricating method of FIGS. 7C, 8A, 8C, and 9C. Alternatively, the control unit 100 may cause the laser to be emitted beyond the range indicated by the image data as illustrated in the fabricating method of FIGS. 7A, 7B, and 9B. The heating temperature of the lower layer in step S12 is controlled to be the melting temperature of the filament or more.

During the movement of the discharge module 10, the control unit 100 causes the filament FM to be discharged from the discharge nozzle 18 to the lower layer on the fabricating table 3 according to the image data of the lowermost layer among the fabrication incomplete layers, out of the input solid model data. This operation forms, on the lower layer, a layer having a shape corresponding to the image data (step S13). The lower layer is remelted at this time, so as to enhance the adhesion at an interface between the layer to be fabricated and the lower layer.

Note that the processing of remelting the lower layer in step S12 and the processing of forming the layer in step S13 may be overlapped with each other. In this case, the three-dimensional fabricating apparatus 1 starts discharge of the filament FM during a period from the start of the processing of emitting laser to the lower layer to the completion of the laser emission to the entire emission range.

The control unit 100 of the three-dimensional fabricating apparatus 1 determines whether the layer formed in step S13 is the outermost layer (step S14). The outermost layer is a layer formed according to image data having the largest coordinates in the stacking direction (Z-axis) among the solid model data. In a case where determination is NO in step S14, the control unit 100 of the three-dimensional fabricating apparatus 1 repeats the remelting processing (step S12) and the layer forming processing (step S13) until completion of formation of the outermost layer.

When the formation of the outermost layer is completed (YES in step S14), the three-dimensional fabricating apparatus 1 finishes the fabrication processing.

### << Specific embodiment for setting reheating range as illustrated in FIG. 10 >>

As described with reference to FIG. 10, the remelting portion RM is intentionally narrowed to enhance adhesion between the stacked layers on the inside without deforming the outer shape of the three-dimensional fabrication object M, making it possible to maintain the fabrication quality. Accordingly, control is performed in the present embodiment so as to adjust the heating amount of the lower layer to be heated according to the fabrication data. For example, the region to be melted (remelting portion RM) and the region not to be melted (outer peripheral portion), among the lower layer, are individually controlled with different heating amounts. Alternatively, the heating amount may be controlled in accordance with the individual positions among the remelting portion RM.

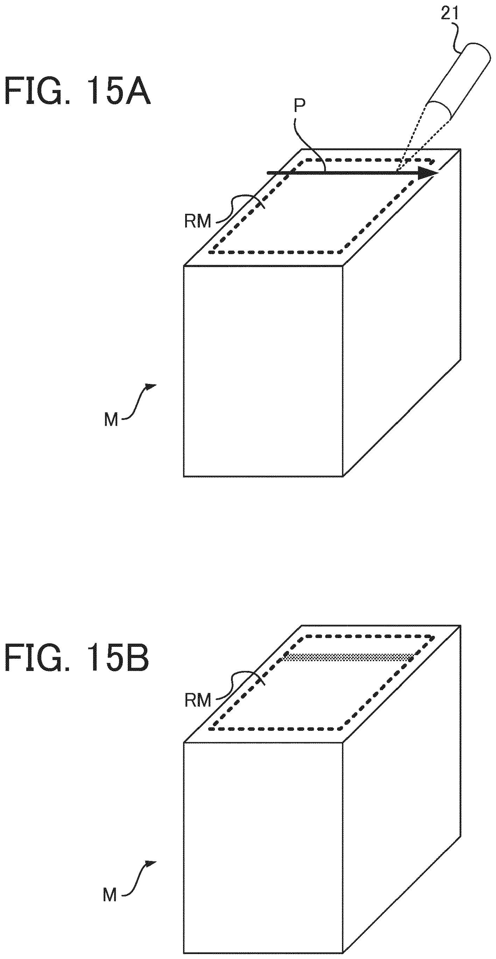

Hereinafter, a preferable heating amount at each of positions of the lower layer will be described. FIGS. 15A and 15B are views each illustrating an example of heating an outermost surface of a three-dimensional fabrication object M in FIG. 10. FIG. 15A illustrates an example of a tool path of a laser light irradiation position. FIG. 15B uses a dark color to illustrate a region melted by laser light application. Hereinafter, an exemplary case of heating and melting the lower layer in order to fabricate the upper layer on the outermost surface of the model portion M illustrated in FIGS. 15A and 15B will be described with reference to FIGS. 15A and 15B as appropriate. Moreover, the description also includes a case of heating the lower layer while moving the laser light irradiation position following the movement of the discharge module 10.

As described above, in order to prevent the deformation of the outer shape, it is preferable not to melt the outer peripheral portion of FIG. 15A. Accordingly, the heating controller 110 controls the output of the laser light source 21 so as not to heat the outer peripheral portion during the heating of the lower layer. Alternatively, in a case where the irradiation position of the laser light source 21 linked with the discharge module 10 is located at the outer peripheral portion, the heating controller 110 may control the laser light source 21 so as to reduce the heating amount to an extent that would suppress melting. The control of the output of the laser light source 21 will be described below.

In a case of heating the remelting portion RM, the heating controller 110 causes the laser light to be output with a predetermined heating amount. At the time of heating the lower layer, the temperature would not be easily raised in the case of heating the positions not heated most recently or immediately before. Accordingly, in the case of heating along a tool path P in FIG. 15A, a heating start end portion, that is, a boundary portion between the outer peripheral portion and the left side of the remelting portion RM, would preferably be heated by a heating amount larger than a predetermined heat amount. Hereinafter, a region of the remelting portion RM excluding the heating start end portion and the heating finish end portion will be referred to as the inside of the remelting portion RM.

After heating the heating start end portion, the heating controller 110 performs control to output the laser light with a predetermined heating amount and to allow the laser light irradiation position to move inside the remelting portion RM along the tool path P. In a case where the laser light irradiation position has moved to the heating finish end portion, that is, to the vicinity of the boundary portion between the outer peripheral portion and the right side of the remelting portion RM, the heating controller 110 controls output of the laser light source 21 so as to suppress melting of the outer peripheral portion. Specifically, the heating controller 110 controls the output of the laser light source 21 so as to reduce the heating amount to an extent that would suppress melting of the outer peripheral portion. Alternatively, in a case where the vicinity of the heating finish end portion has been sufficiently heated, the heating by laser light emission may be finished.

In this manner, the output of the laser light source 21 can be controlled in accordance with the shape and position of the heating range so as to enable appropriate melting of the remelting portion RM, leading to enhancement of the adhesion between the stacked layers. At this time, since the outer peripheral portion of the lower layer is not melted, deformation of the outer shape can be prevented.

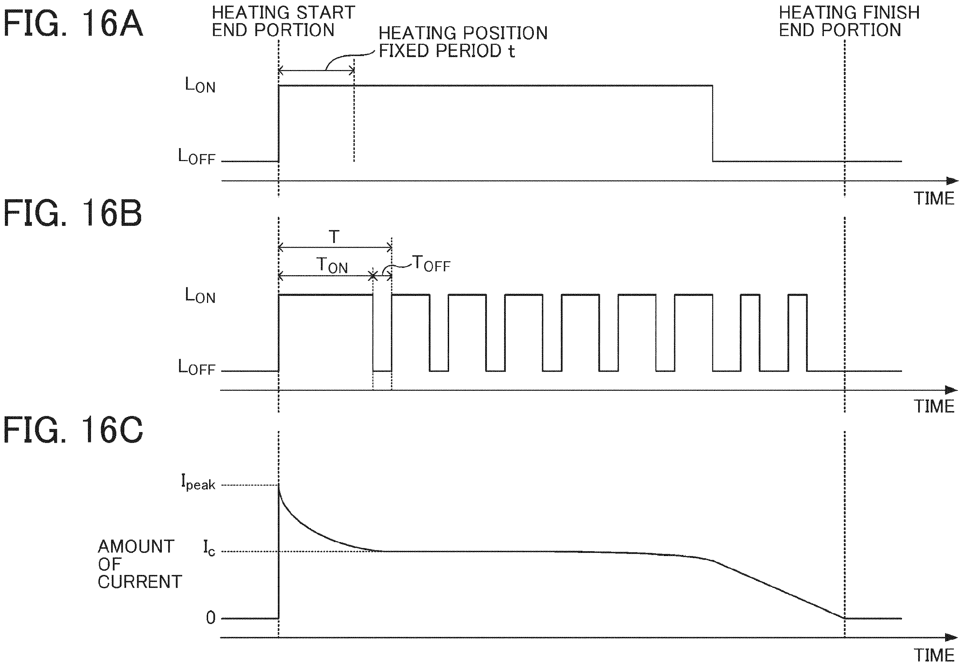

Hereinafter, a specific heating control method for controlling so as to appropriately melt the remelting portion RM will be described with reference to FIGS. 16A to 16C. FIGS. 16A to 16C are timing charts for controlling operation of the heater by the heating controller 110 in the present embodiment. In the following, an exemplary case where heating is performed while the irradiation position is moved along the tool path P within the three-dimensional fabrication object M as illustrated in FIGS. 15A and 15B will be described.

The fabrication data analysis unit 112 generates a timing chart illustrating reheating conditions as illustrated in FIGS. 16A to 16C in accordance with the fabrication data D. The heating controller 110 controls the heater according to the conditions of the timing chart.

In FIG. 16A, the heating amount is controlled in accordance with switching on (L_{ON}) and off (L_{OFF}) of the laser light source 21 and presence or absence of movement of the irradiation position. For example, in a case where heating is unnecessary because the discharge module 10 is located at the outer peripheral portion (prior to the start of heating), the laser light source 21 is turned off. Thereafter, at the time when heating of the remelting portion RM is started, heating of the heating start end portion is started. As described above, the temperature in the vicinity of the heating start end portion would not be easily raised because the position has not been heated most recently or immediately before. Accordingly, it is preferable to increase the heating amount in the vicinity of the heating start end portion. In the heating by laser light emission, continuously emitting the laser light to a certain position, the temperature of the material would rise with the lapse of time. Accordingly, fixing the position to which the laser light is emitted would make it possible to increase the heating amount.

In the present embodiment, the laser light source 21 is turned on and heating is performed with the heating position fixed for a constant time in the vicinity of the heating start end position of the remelting portion RM. In the example of FIG. 16A, the heating position is fixed in the vicinity of the heating start end position from the heating start time until time t. With this configuration, heating is achieved in a relatively short time even at the heating start end portion where the temperature would not easily rise. Note that the heating position fixing period depends on various environments such as material physical properties, ambient temperature and shape, and may be obtained in advance by experiments or simulations.

After heating the heating start end portion (after time t has elapsed), the heating controller 110 controls the laser light source 21 so as to move the irradiation position along the tool path P. At this time, the heating controller 110 moves the irradiation position at a predetermined speed based on the fabrication data to enable melting of the remelting portion RM.

After movement of the irradiation position to the vicinity of the heating finish end portion with the lapse of time, the output of the laser is lowered to reduce the heating amount in order to prevent melting of the outer peripheral portion. Furthermore, in the case where the vicinity of the heating finish end portion is sufficiently heated, the output of the laser may be turned off before reaching the end portion of heating as illustrated in FIG. 16A. Reduction of the heating amount or turning off the laser would make it possible to prevent deformation of the outer shape and to suppress degradation of fabricating quality.

Furthermore, as in FIG. 16B, drive time control is performed to control the heating amount. As illustrated in the chart 300 of FIG. 13A, this method controls the laser light turn-on timing T_{ON} and the laser light turn-off timing T_{OFF}. As described with reference to FIG. 13A, increasing the duty ratio in the PWM control would increase the heating amount.

Specifically, the heating controller 110 performs control to allow the duty ratio to decrease with the lapse of time while moving the laser light irradiation position from the heating start end portion to the heating finish end portion. For example, the duty ratio increase is performed so that the heating amount increases in the vicinity of the heating start end portion where the temperature would not easily rise. In the case of heating the inside of the remelting portion RM, the irradiation position is moved while maintaining a constant duty ratio. In the vicinity of the end portion of the heating end, the duty ratio is decreased so that the heating amount becomes small. In the vicinity of the heating finish end portion, the off state time may be continued and heating may be terminated, similarly to the case of FIG. 16A.

With this configuration, the heating amount can be increased at the heating start end portion, and the heating amount can be reduced in the vicinity of the heating finish end portion. This enables heating the lower layer without melting the outer peripheral portion, making it possible to prevent degradation of the fabrication accuracy due to deformation of the outer shape.

Furthermore, in FIG. 16C, the heating amount is controlled by the drive current of the laser light source 21. In this method, the drive current for the laser drive is controlled as illustrated in the chart 302 of FIG. 13B. The output of the laser light source 21 is proportional to the amount of current. Accordingly, laser light emission is performed with increased amount of current to increase the heating amount; laser light emission is performed with reduced amount of current to reduce the heating amount.

Specifically, the heating controller 110 controls the amount of current while moving the laser light irradiation position from the heating start end portion to the heating finish end portion. For example, the amount of current is increased so that the heating amount increases in the vicinity of the heating start end portion where the temperature would not easily rise. In FIGS. 16A to 16C, the amount of current is controlled to be Ipeak at the heating start end portion, making it possible to heat the heating start end portion in a short time. Thereafter, the irradiation position moves from the heating start end portion toward the inside of the remelting portion RM. At this time, the amount of current is caused to decrease with the lapse of time. In a case where the irradiation position is inside the remelting portion RM, the irradiation position is caused to move toward the heating finish end portion while driving the laser light source 21 with a constant amount of current. In the vicinity of the heating finish end portion, the irradiation position is caused to move while decreasing the amount of current with the lapse of time so as to reduce the heating amount.

With this configuration, the heating amount can be increased at the heating start end portion, and the heating amount can be reduced in the vicinity of the heating finish end portion. This enables heating the lower layer without melting the outer peripheral portion, making it possible to prevent degradation of the fabrication accuracy due to deformation of the outer shape.

According to the present embodiment, the heating amount can be controlled according to the shape and position of the layer to be heated, making it possible to appropriately heat the remelting portion RM. This makes it possible to prevent degradation of fabrication accuracy due to deformation of the outer shape.

### « Specific embodiment for setting reheating range as illustrated in FIG. 11 »

As described with reference to FIG. 11, in order to enhance the strength of the outer peripheral portion of the shape of the three-dimensional fabrication object M, the three-dimensional fabricating apparatus 1 reheats portions including an outer peripheral portion of the lower layer Ln-1, making it possible to expand the remelting portion RM as much as possible. However, in a case where remelting including the outer peripheral portion is attempted, the lower layer might be heated beyond a carbonization temperature by reheating, which might lead to carbonization of the filament FM.

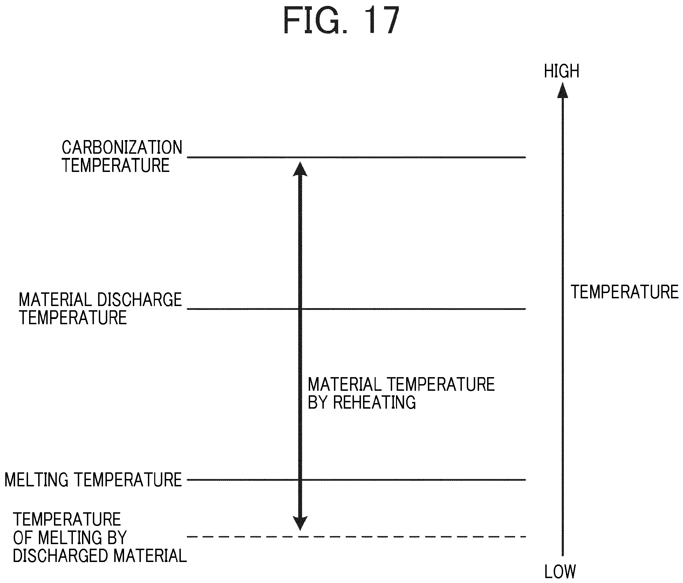

FIG. 17 is a schematic diagram illustrating preferable temperature conditions for reheating. As illustrated in FIG. 17, the filament fabrication material typically has a melting temperature and a carbonization temperature at a higher temperature than the melting temperature as characteristics of the material. There is also a case where there is no wide difference between the melting temperature and the carbonization temperature depending on the material.

The inventors have executed simulation and obtained the finding that the temperature of a material rises with the lapse of time and with continuation of heating even with an identical heating amount in a case where the laser device is used as a heater. Continuation of laser emission leads to continuation of temperature rise to reach the carbonization temperature of the fabrication material, making it difficult to continue high-quality fabrication. In particular, unlike the inner region surrounded by the fabrication material, the peripheral portion of the fabrication object shape M is adjacent to a space with relatively low heat transfer, leading to accumulation and encapsulation of heat and occurrence of unintentional carbonization.

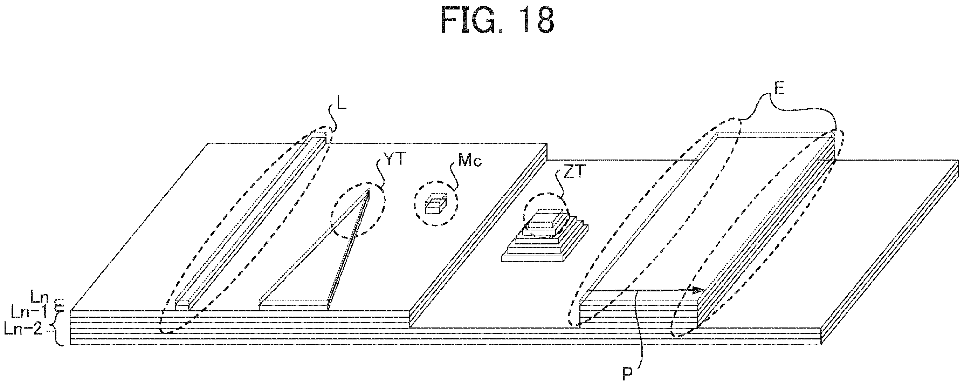

FIG. 18 is a schematic view illustrating a typical location having high probability of occurrence of carbonization of a fabrication material by reheating. In FIG. 18, one or more fabricated lower layers Ln-1, Ln-2... are represented by a solid line, and the upper layer Ln to be formed is represented by a dotted line.

As illustrated in FIG. 18, probable heat accumulation locations include a peripheral portion E having the above-described shape, a tapered tip portion TP1 in the XY plane, a tapered tip portion TP2 in the Z direction, a micro-shape portion Mc, a fine line shape L, and other thin portions. These portions are likely to suffer carbonization problem described above.

In this manner, even with the identical laser output, the temperature rise occurs in a variety of manners depending on the shape of the site to be reheated, leading to the possibility of inadvertently exceeding the carbonization temperature. To overcome this problem, the present embodiment uses the fabrication data including the type of fabrication material and the lower layer Ln-1 or the like to be reheated to estimate the temperature rise of the fabrication material due to heating under individual conditions such as laser irradiation time and the light amount under predetermined conditions (moving speed and various characteristics of the laser), and determines reheating conditions that would prevent the temperature from exceeding the carbonization temperature for each of positions. The fabrication data analysis unit 112 determines such reheating conditions by analyzing fabrication data. In addition, the degree of temperature rise that can be expected under each of laser output conditions with what type of fabrication material to achieve what type of shape is to be formulated in advance by experiments and simulations, and a table associating the shape types and reheating conditions can be prepared for each of fabrication materials (and for each of moving speeds, as necessary).

In FIG. 18, a region illustrated in gray indicates a region on the lower layer Ln-1 on which the upper layer Ln is to be formed, and this region can be set as a reheating range. Furthermore, the analysis of the fabrication data D specifies the peripheral portion E, the tapered tip portion TP1 a TP2 in any direction, the micro-shape portion Mc, the thin line portion L, and the thinned portion as illustrated in FIG. 18. These specified regions are also defined as remelting portions RM similarly to the inner portions. However, since these are portions having high probability of carbonization, the corresponding regions reheating conditions are to be determined for these regions for which heating is to be moderated as compared with the inside. In FIG. 18, the portion for which the heating is to be moderated is illustrated in a relatively light gray color. Furthermore, the shapes of having high probability of carbonization have a variety of temperature rise pattern depending on specific shapes. Accordingly, the degree of moderating the heating may be determined in accordance with individual shapes. In this manner, the reheating conditions at each of positions in the reheating range (either one or both of the drive time and the drive current) are determined so as to achieve remelting in the whole region of the lower layer Ln-1 set as the reheating range and to prevent carbonization in any of the portions.

Note that preferable temperature conditions for reheating are as indicated by thick arrows in FIG. 17. The temperature of the material normally from the discharge nozzle 18 is normally set between the melting temperature and the carbonization temperature. When the lower layer fabrication material can be melted by reheating, the material of the lower layer and the discharged material can be mixed, leading to enhancement of adhesion. On the other hand, as described above, since the material has a carbonization temperature, it is preferable that the heating is controlled so that the temperature of the fabrication material by heating is not less than the melting temperature and not more than the carbonizing temperature inherent to the fabrication material.

Note that the temperature obtained by reheating need not be the melting temperature or more as indicated by the thick arrow in FIG. 17, including a region below the melting temperature. Since the temperature of the fabrication material to be discharged is normally set higher than the melting temperature, the lower layer temperature can be increased to enable remelting when the lower layer comes in contact with the molten filament FM even in a case where the temperature of the reheated lower layer is lower than the temperature of the molten material. That is, reheating may be controlled so that the temperature of at least the region of the lower layer being in contact with the molten fabrication material becomes the temperature at which the fabrication material is melted, or more. Since the temperature of the molten material to be discharged is set to be lower than the carbonization temperature, the temperature of the molten material would not rise to the carbonization temperature of the lower layer, or more, even when it is discharged to the heated lower layer.

In a case where the filament is formed of a material having a clearly observable melting point like a crystalline plastic, the above-described melting temperature matches the melting point. However, there are some materials having no clearly observable melting point, such as amorphous plastics. In a case where such a material is used, it would be sufficient as long as it is a temperature capable of obtaining a predetermined fluidity enabling mixing with the discharged filament. The above-described "melting temperature" includes such temperature depending on the fabrication material used. Note that while resins turn to black by thermal decomposition, resins might change its color due to oxidation even before the decomposition start temperature. Accordingly, the above-described "carbonization temperature" can be defined as a temperature that can cause discoloration or physical property change as unacceptable quality.

### << Reheating temperature control 1 for reheating range setting as illustrated in FIG. 11 >>

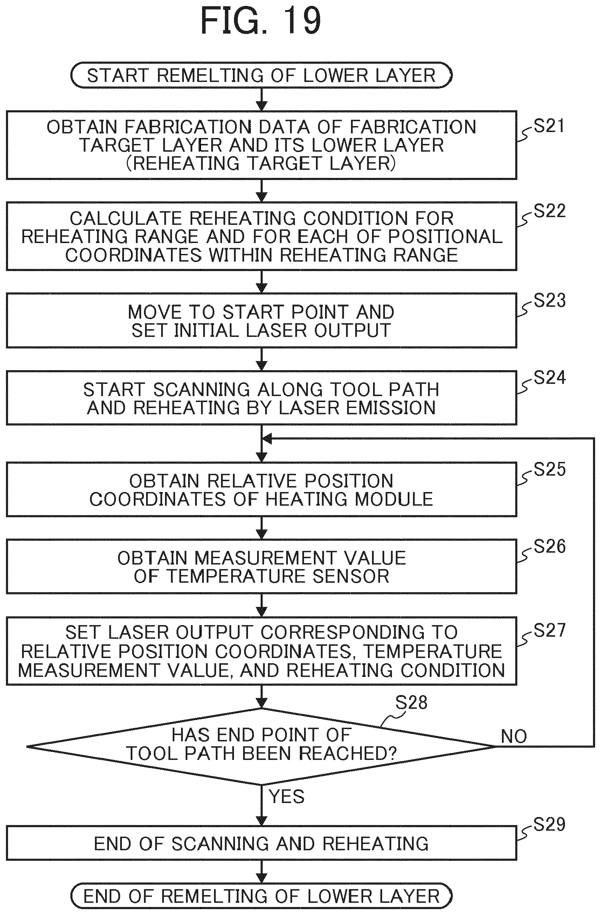

FIG. 19 is a flowchart illustrating lower layer remelting processing according to one embodiment. Hereinafter, the lower layer remelting processing for one layer corresponding to step S12 in FIG. 14 will be described in more detail with reference to FIG. 19.

In step S21, the heating controller 110 controls the fabrication data analysis unit 112 to obtain prescribed fabrication data out of the input solid model data. Here, the uppermost layer out of the fabricated layers, to be the remelting processing target will be referred to as a "reheating target layer", and the layer to be fabricated above the reheating target layer in step S13 in FIG. 14 will be referred to as a "fabrication target layer". Fabrication data of the fabrication target layer Ln and fabrication data of the reheating target layer Ln-1 are obtained in step S21. Furthermore, fabrication data of the lower layer (Ln-2,...) being the reheating target layer Ln-1 or below may be obtained as necessary. The fabrication data of the lower layer (Ln-2,...) being the reheating target layer Ln-1 or below would be effective in a case where the temperature rise can be more accurately estimated by stereoscopically grasping the shape. Moreover, fabrication data is assumed to also include information concerning model material.

In step S22, the heating controller 110 controls the fabrication data analysis unit 112 to analyze the obtained fabrication data, and determines reheating conditions within a reheating range and at individual positional coordinates within the reheating range so as not to exceed the carbonization temperature determined by the fabrication material. The reheating range and the reheating condition are given to individual position coordinates as a gradation value indicating the output value (drive time/drive current) of the laser, for example.

In step S23, the control unit 100 moves the heating module 20 (and the discharge module 10) to a start point of the tool path P, and sets an initial value of the output value of the laser for reheating. At this time, when the measurement value of the temperature sensor 104 can be obtained, the lower layer temperature at the position of the start point may be measured in advance to adjust the initial value of the laser output described above. Furthermore, in a case where heating has not been performed most recently or immediately before the start of reheating, the temperature is not easily raised at the start of reheating. Therefore, in order to raise the material temperature to a predetermined temperature in a short time, the laser light amount (one or both of the drive time or the drive current) may be set to be larger than a predetermined amount.

In step S24, the control unit 100 starts scanning along the tool path P of the heating module 20 and reheating by the heating module 20. Scanning is performed at a predetermined moving speed. Note that there is a case in which heating is performed by irradiating an identical region of the heating target layer for a certain period t corresponding to the slow temperature rise at the start of reheating. Typically, the scanning of the discharge module 10 in the fabrication operation (step S13) of the fabrication target layer is also started in step S24. Here, the tool path for forming the whole of the fabrication target layer is assumed to have been preliminarily calculated.

When scanning and reheating is started, the loop from step S25 to step S28 is executed by the heating controller 110 to control the heating so as not to allow the reheating target layer to be a carbonization temperature or more corresponding to the fabrication material.

In step S25, the heating controller 110 obtains the relative position coordinates of the heating module 20 (heated site) from the detection results of the Z-axis coordinate detector 114, the X-axis coordinate detector 116, and the Y-axis coordinate detector 118. In step S26, the heating controller 110 obtains a measurement value of the lower layer temperature before heating sensed by the temperature sensor 104. In step S27, the heating controller 110 sets the output value (drive time/drive current) of the laser in accordance with the obtained relative position coordinates, the measurement value of the lower layer temperature, and the reheating condition calculated in step S22.

As described above, in a case where a reheating condition is given as a gradation value for each of position coordinates, a gradation value corresponding to the obtained relative position coordinates is read out. Subsequently, correction using the measurement value of the lower layer temperature is performed according to the read gradation value, so as to set the laser output value (drive time/drive current). At this time, in a case where the amount of laser light at the start of laser driving has been increased more than the predetermined amount so that the temperature of the material layer rises to a predetermined temperature in a short time, the increased amount is to be reduced with the lapse of time. In a case where the relative position coordinates indicate out of the reheating range, the output value is to be set to a value indicating stoppage of the laser output or a weak output value with minimal impact.

In step S28, the heating controller 110 determines whether the end point of the tool path P has been reached. In a case where it is determined in step S28 that the end point of the tool path P has not been reached, acquisition of relative position coordinates (step S25), the lower layer temperature measurement (step S26), and laser output value setting (step S27) are to be repeated. In a case where the end point of the tool path P has been reached (YES in step S28), the three-dimensional fabricating apparatus 1 completes the remelting processing of the reheating target layer.

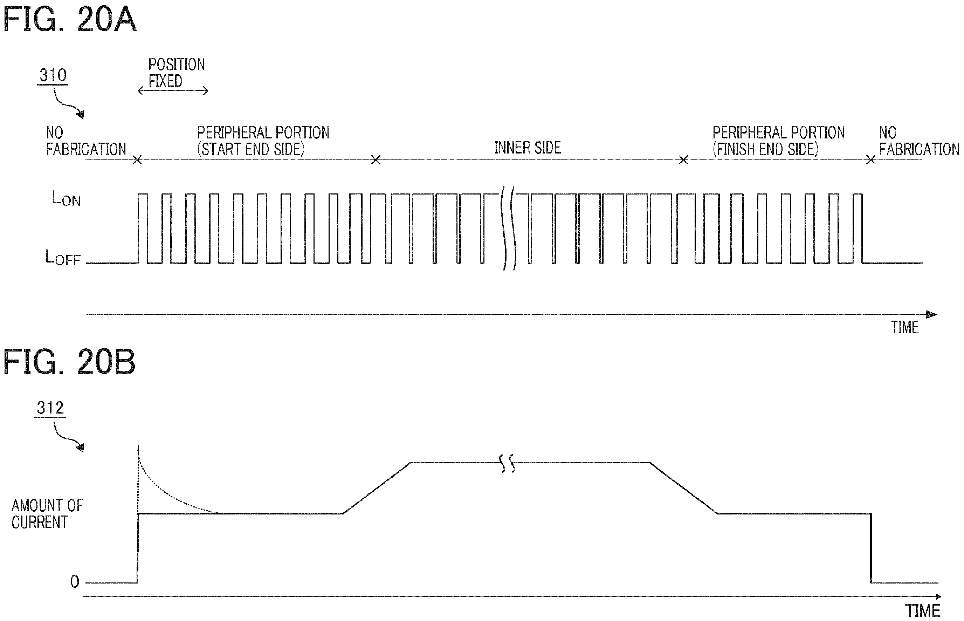

FIGS. 20A and 20B include timing charts 310 and 312, respectively, illustrating the driving state of the laser light source in the case of reheating along the tool path P illustrated in FIG. 18. As illustrated in the charts 310 and 312, the drive time in the peripheral portion is set to be shorter or the drive current is set to be smaller than the inner region. FIG. 20 also illustrates a case, indicated by a dotted line, where the amount of laser light immediately succeeding the start of laser driving is increased beyond a predetermined amount so that the material temperature rises to a predetermined temperature in a short time, and then, the laser light amount is gradually returned to a predetermined value.

While the embodiment described above is a case where the reheating range is set for the entire lower layer including the peripheral portion, embodiments of the present disclosure are not limited to the above-described embodiment. There may be another embodiment in which a portion of the peripheral portion is to be partially excluded in the setting of the reheating range. For example, in a case where there is a portion having a complicated shape and difficult to be processed by secondary processing, it is possible to configure to perform reheating excluding the peripheral portion, while reheating the portion that can be easily processed by secondary processing including the peripheral portion. Furthermore, it is possible to perform reheating combined with a method using the above-described support material.

### << Reheating temperature control 2 for reheating range setting as illustrated in FIG. 11 >>

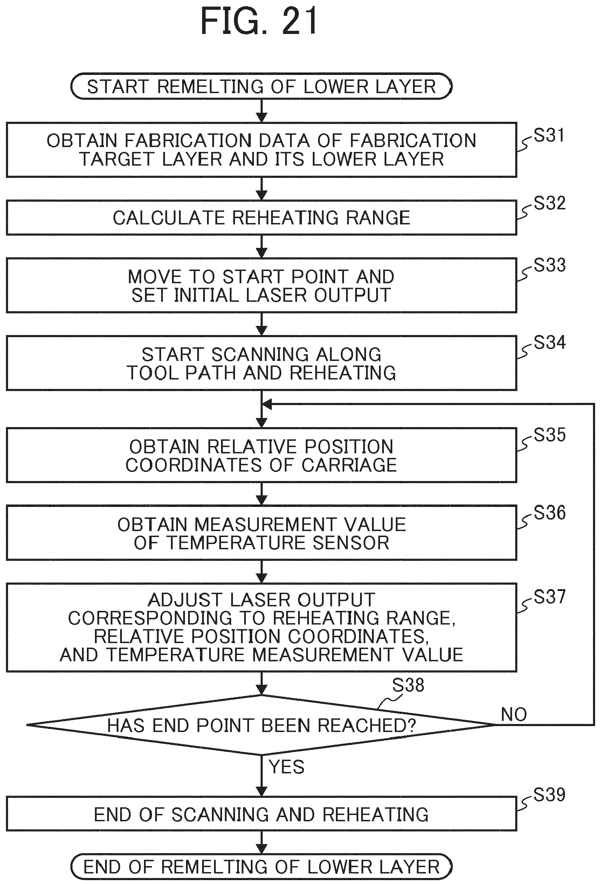

The lower layer remelting processing has been described with reference to FIG. 19. The processing illustrated in FIG. 19 corresponds to a feedforward type temperature control in which an appropriate reheating condition is preliminarily calculated on the basis of fabrication data. FIG. 21 is a flowchart illustrating a lower layer remelting processing according to another embodiment. Hereinafter, a case where the temperature is controlled in a feedback system based on the measurement result by the temperature sensor 104 in the lower layer remelting processing in S12 of FIG. 14 will be described with reference to FIG. 21.

In step S31, the heating controller 110 controls the fabrication data analysis unit 112 to obtain prescribed fabrication data out of the input solid model data. Here, fabrication data of the fabrication target layer Ln and fabrication data of the reheating target layer Ln-1 are obtained.

In step S32, the heating controller 110 controls the fabrication data analysis unit 112 to determine a reheating range on the basis of the obtained fabrication data. In the case of the feedback system, calculation of the reheating condition at each of position coordinates within the reheating range would be unnecessary.

In step S33, the control unit 100 moves the heating module 20 (and the discharge module 10) to a start point of the tool path P, and sets an initial laser output value for reheating (drive time/drive current). In step S34, the control unit 100 starts scanning and reheating at a predetermined moving speed along the tool path P.

When scanning and reheating is started, the loop from step S35 to step S38 is executed by the heating controller 110 to control the heating so as not to allow the reheating target layer to be a carbonization temperature or more corresponding to the fabrication material on the basis of the temperature measurement result at the heated position obtained by the temperature sensor 104.

In step S35, the heating controller 110 obtains relative position coordinates of the heating module 20. In step S36, the heating controller 110 obtains the measurement value of the temperature of the lower layer during heating, measured by the temperature sensor 104. In step S37, the heating controller 110 controls the laser output value (drive time/drive current) so as to bring it closer to the target value in accordance with the reheating range, the obtained relative position coordinates, and the measurement value of the temperature during heating. In a case where the relative position coordinates indicate out of the reheating range, the output value is to be set to a value indicating stoppage of the laser output or a weak output value with minimal impact.

In step S38, the heating controller 110 determines whether the end point of the tool path P has been reached. In a case where it is determined in step S28 that the end point of the tool path P has not been reached, acquisition of relative position coordinates (step S35), the lower layer temperature measurement (step S36), and laser output setting (step S37) are to be repeated. In a case where the end point of the tool path P has been reached (YES in step S38), the three-dimensional fabricating apparatus 1 completes the remelting processing of the reheating target layer.

According to the processing illustrated in FIG. 21, separately providing a unit (temperature sensor) for detecting the temperature of the formed material layer to be heated would make it possible to omit necessity to preliminarily obtain the heating amount, enabling setting of an appropriate heating amount in accordance with the material and fabrication data.

### <<< Modification A of Embodiment >>>

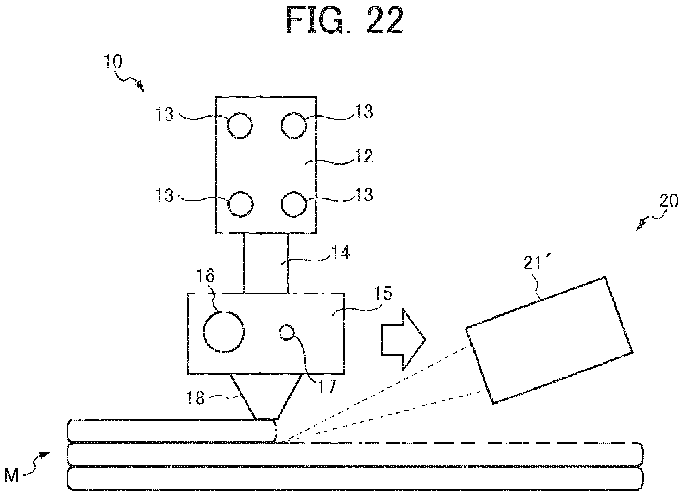

Subsequently, modification A of the embodiment will be described focusing on points different from the above embodiment. FIG. 22 is a schematic view illustrating operation of lower layer heating in one embodiment.

In the modification A of the embodiment, the heating module 20 has a hot air source 21'. Examples of the hot air source 21' include a heater and a fan. In the modification A of the embodiment, the hot air source 21' blows high temperature air to the lower layer to heat and remelt it. Also in the modification A of the embodiment, the filament FM is discharged to the remelted lower layer to form the upper layer. This allows the materials of the lower layer and the upper layer to be mixed, leading to enhancement of the adhesion between the upper layer and the lower layer.

### <<< Modification B of Embodiment >>>

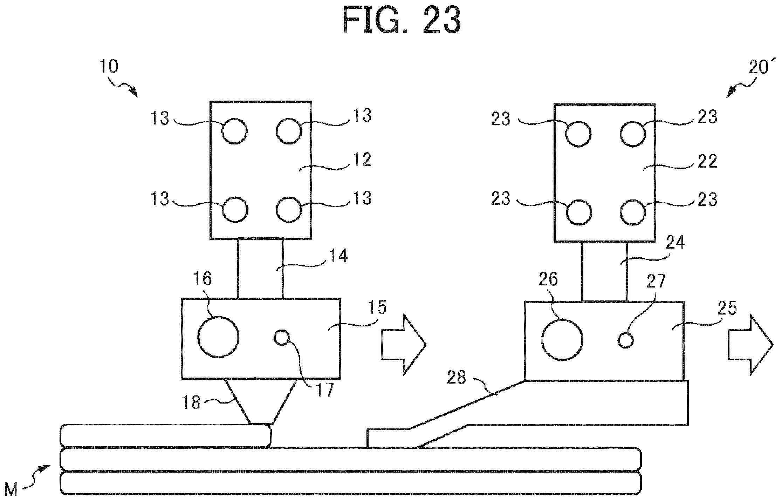

Subsequently, modification B of the embodiment will be described focusing on points different from the above embodiment. FIG. 23 is a schematic view illustrating operation of lower layer heating in one embodiment.

In the modification B of the embodiment, the heating module 20 of the three-dimensional fabricating apparatus 1 is replaced by a heating module 20'. The heating module 20' includes: a heating plate 28 that heats and pressurizes the lower layer of the three-dimensional fabrication object M; a heating block 25 that heats the heating plate 28; and a cooling block 22 for preventing thermal conduction from the heating block 25,. The heating block 25 includes: a heat source 26 such as a heater; and a thermocouple 27 for controlling the temperature of the heating plate 28. The cooling block 22 includes a cooling source 23. The portion between the heating block 25 and the cooling block 22 includes a guide 24.

The heating module 20' is held slidably via a connecting member with respect to the X-axis drive shaft 31 (X-axis direction) extending in the apparatus left-right direction (left-right direction in FIG. 1 = X-axis direction). The heating module 20' is heated to a high temperature by the heating block 25. In order to reduce the heat transfer to the X-axis drive motor 32, the transfer path or guide 24 including the filament guide 14 is preferably low thermal conductivity members.

In the heating module 20', the lower end of the heating plate 28 is arranged to be lower by one layer than the lower end of the discharge nozzle 18. Filament discharge is performed while allowing the discharge module 10 and heating module 20' to perform scanning in the direction of open arrows illustrated in FIG. 23, and together with this, the heating plate 28 reheats the layer below the layer being fabricated. This reduces the temperature difference between the layer being fabricated and the layer underneath, so as to allow the materials to be mixed between the layers, enhancing inter-layer strength of the fabrication object. Examples of a method for cooling the heated layer include: a method of setting the atmospheric temperature; a method of leaving the heated layer for a predetermined time; and a method of using a fan.

According to the modification B of the embodiment, physically mixing materials between layers makes it possible to enhance the adhesion at the interface between the layers. Furthermore, according to the modification B of the embodiment, the lower layer is selectively heated without deforming the outer shape of the fabrication object and next discharge is performed during remelting of the lower layer, leading to enhancement of the adhesion at the interface.

### <<< Modification C of Embodiment >>>

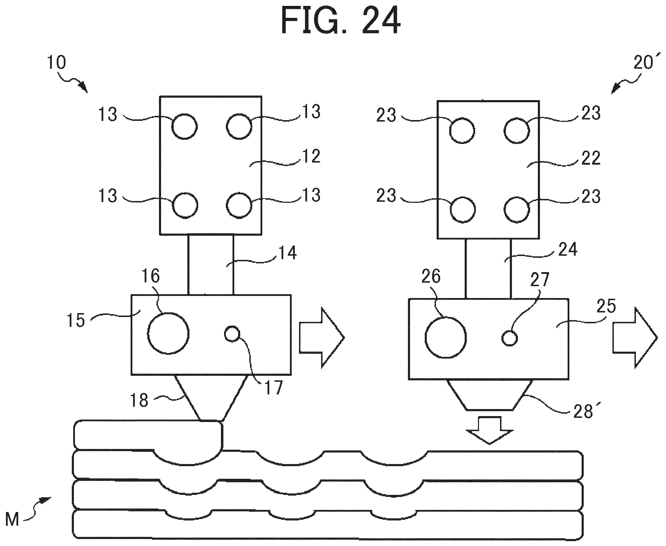

Subsequently, modification C of the embodiment will be described focusing on points different from the modification B of the embodiment described above. FIG. 24 is a schematic view illustrating operation of lower layer heating in one embodiment.

In modification C of the embodiment, the heating plate 28 in the heating module 20' is replaced with a tap nozzle 28'. The tap nozzle 28' is heated by the heating block 25. The tap nozzle 28' uses motor power, or the like, to perform tapping motion of repeatedly tapping the three-dimensional fabrication object M from vertically above, so as to heat and pressurize the lower layer of the three-dimensional fabrication object M. This reduces the temperature difference between the layer being fabricated and the layer underneath, so as to allow the materials to be mixed between the layers, enhancing inter-layer strength of the fabrication object. After the tapping motion, the filament FM is discharged from the discharge nozzle 18 so as to fill the surface of the lower layer recessed by the tapping motion. Filling the recessed portion of the lower layer with the filament FM would achieve smooth finish of the outermost surface shape.

### <<< Modification D of Embodiment >>>

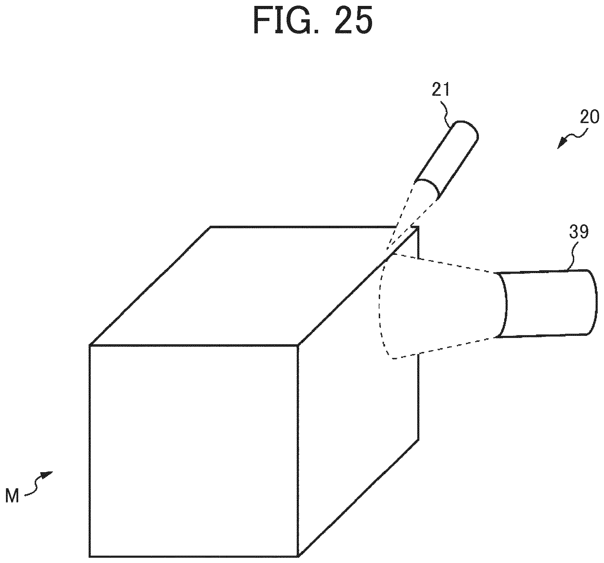

Subsequently, modification D of the embodiment will be described focusing on points different from the above embodiment. FIG. 25 is a schematic view illustrating operation of lower layer heating in one embodiment.

According to the modification D of the embodiment, the heating module 20 includes a side surface cooler 39 for cooling a side surface of the three-dimensional fabrication object M, that is, a surface parallel to the Z-axis. An example of the side surface cooler 39 is a fan, although it is not particularly limited as long as it is a cooling source capable of cooling the side surface of the three-dimensional fabrication object M.

Reheating the outer peripheral portion of the three-dimensional fabrication object M without performing processing of maintaining the outer shape would deform the outer shape, leading to degradation of fabrication accuracy. To avoid this, in modification D of the embodiment, the outer peripheral portion of the three-dimensional fabrication object M is reheated while applying cooling air to the side surface of the three-dimensional fabrication object M. This makes it possible to stack the layers of material while maintaining the shape of the portion being fabricated.

### <<< Modification E of Embodiment >>>

Subsequently, modification E of the embodiment will be described focusing on points different from the above embodiment.

Fabricating the lower layer or the fabrication space while performing heating might reduce the viscosity of a heated portion on the three-dimensional fabrication object M, leading to deformation of the outer shape and deterioration of the fabrication accuracy. On the other hand, fabricating the lower layer or the fabrication space without performing heating would increase the viscosity of the three-dimensional fabrication object M but make it difficult to maintain the strength in the stacking direction. To cope with this, according to modification E of the embodiment, a filament having non-uniform material composition is used for fabricating.

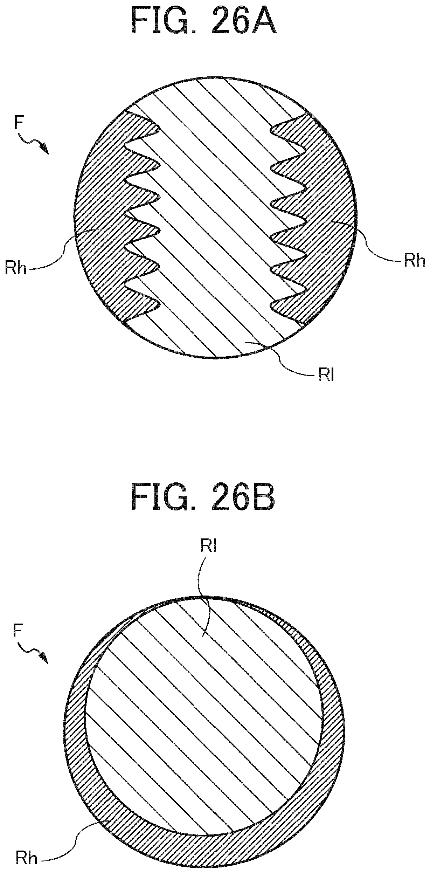

FIGS. 26A and 26B are cross-sectional views each illustrating an example of a filament having non-uniform material composition. In the example of FIG. 26A, a high viscosity resin Rh is disposed on both sides of the filament F, while a low viscosity resin Rl is arranged in the center.

Examples of the high viscosity resin Rh disposed on both sides of the filament F include resins to be highly viscous by blending a filler such as alumina, carbon black, carbon fiber, glass fiber, or the like, although there is no particular limitation to the high viscosity resin Rh. In a case where the filler inhibits a desired function, it is allowable to use a molecular weight-controlled resin as the high viscosity resin Rh.

Examples of the low viscosity resin Rl to be disposed in the center portion of the filament F include a resin having a low molecular weight grade, although there is no particular limitation to the low viscosity resin Rl.

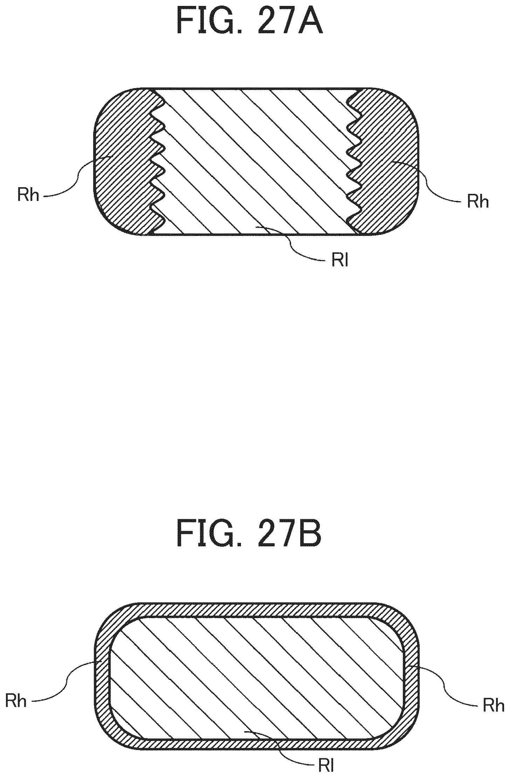

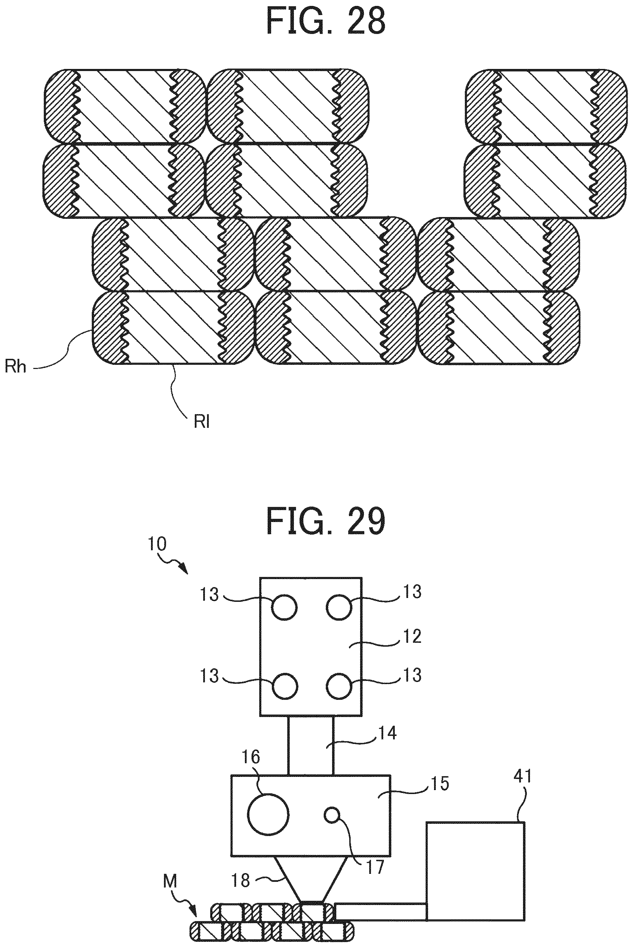

FIGS. 27A and 27B are respectively cross-sectional views of a discharged material of the filament of FIGS. 26A and 26B. FIG. 28 is a cross-sectional view of a fabrication object to be fabricated by using the filament of FIGS. 26A and 26B. The filament of FIG. 26A is discharged to obtain an output having the shape of FIG. 27A, resulting in acquisition of a fabrication object of FIG. 28. High viscosity resin is arranged on the outer peripheral portion in the fabrication object of FIG. 28, making it possible to naturally suppress deformation of the fabrication object.

FIG. 26B illustrates another example of a filament having non-uniform material composition. The filament of FIG. 26B is discharged to produce an output having the shape of FIG. 27B. In this manner, the filament of FIG. 26B can also be used to obtain a fabrication object having a high viscosity resin arranged at its outer peripheral portion. In addition, the present configuration of encapsulating the low viscosity resin would be advantageous from the viewpoint as a manufacturing method in that it is easier in forming filaments than the configuration of FIG. 27A.

However, use of the filament of FIG. 27B would make the lower portion of the layer highly viscous. A high viscosity resin is likely to have a higher melting point than a low viscosity resin. In order to prevent the molten resin from moving in the horizontal direction when remelting the lower layer at high temperature, it is preferable to avoid heating the outer peripheral portion of the fabrication object. Accordingly, it is preferable to use, as the heater, a laser or the like capable of performing small spot heating.

In order to enhance the adhesion force of the outer peripheral portion in the stacking direction, it is preferable, in the case of heating the outer peripheral portion, to perform heating by applying a plate or the like directly from the side of the fabrication object. This can regulate the movement of the resin in the horizontal direction due to the reduced viscosity. FIG. 29 is a schematic view illustrating an example of a three-dimensional fabricating apparatus having a regulating unit.

In the example of FIG. 29, the three-dimensional fabricating apparatus 1 includes an assist mechanism 41 as an example of the regulating unit. In the FFF method, one layer has a thickness of about 0.10 mm to 0.30 mm. Therefore, the plate in the assist mechanism 41 is a thin plate such as a thickness gauge. The assist mechanism 41 is secured to the discharge module 10, or secured to a bracket indirectly secured to the discharge module 10.

It is preferable that the plate of the assist mechanism 41 is heated to a temperature higher than room temperature. The reason is that, depending on the type of resin used, when a plate with room temperature comes in contact with the crystalline resin, the resin would be rapidly cooled to promote amorphization, and this might hinder acquisition of the desired strength.

Viscosity is typically expressed as a function of temperature and shear rate. Engineering plastic or super engineering plastic, etc. used in the fused filament fabrication (FFF) method exhibits nonlinear behavior with respect to variables such as temperature and shear rate. Therefore, shear resistance necessary for the FFF system, that is, the viscosity of the resin can sometimes be obtained even when the temperature is below the melting point Tm of the resin. On the other hand, in a case where the viscosity at the desired shear rate (S. Rate) is too low in the region having a temperature of the melting point Tm or more, there might be problems such as drips from the nozzle, insufficient retraction at the filament retraction (retracting motion), associated short shots at the initial stage of discharge, or deformation of the fabrication object.

In typical cases, in a resin having a predetermined temperature of Tm or more, the viscosity is maximized at this predetermined temperature, when S. Rate = 0, that is, when no discharge operation is under execution. In a case where liquid drip occurs even in this state, using a resin composite with the filler can be an effective means for preventing the drip. Adding a filler to the resin for controlling the compounding ratio or the particle size/fiber length distribution etc. of the compound to be blended would impart thixotropy during melting. This achieves a state to suppress dripping at non-discharging operation and a state of low viscosity at discharging operation.

The method of adding a filler to the filament is also preferable even against deformation of the fabrication object that is likely to occur with an increase in the temperature of the lower layer. In a case where fabrication accuracy cannot be maintained even with the addition of a filler, it is preferable to regulate the side surface of the fabrication object.

### <<< Modification F of Embodiment >>>

Subsequently, modification F of the embodiment will be described focusing on points different from the modification E of the embodiment described above.

In the case of using a filament having non-uniform material composition, it is preferable to regulate the direction of the filament introduced into the discharge module 10 so that the high viscosity resin Rh is arranged on the outer peripheral portion of the fabrication object.

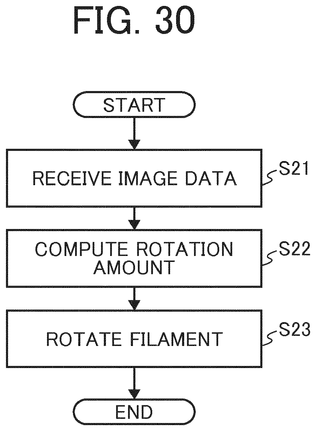

FIG. 30 is a flowchart illustrating an example of processing of regulating the direction of the filament. The imaging module 101 of the three-dimensional fabricating apparatus 1 captures an image of a filament to be introduced into the discharge module 10, and transmits obtained image data to the control unit 100.

The control unit 100 receives the image data of the filament transmitted by the imaging module 101 (step S21). The control unit 100 analyzes the received image data of the filament and calculates the rotation amount (step S22). An example of methods for calculating the rotation amount includes a method of determining the rotation amount such that the boundary between the high viscosity resin Rh and the low viscosity resin Rl in the filament F comes at a predetermined position, although there is no particular limitation to the method. For example, in the case of discharging filaments while moving the discharge module 10 in the X-axis direction, non-uniformly arranging the high viscosity resin Rh in the filament in the positive and negative directions of the Y-axis would make it possible to arrange the high viscosity resin in an outermost shell of the fabrication object. Accordingly, the control unit 100 determines the rotation amount of the filament so as to arrange the resin Rh non-uniformly in the positive and negative directions of the Y-axis.

The control unit 100 transmits a signal for rotating the filament to the torsional rotation mechanism 102 according to the determined rotation amount. The torsional rotation mechanism 102 rotates the filament according to the signal (step S23). This operation enables the filament to be regulated in a desired direction.

Note that arranging the high viscosity resin outside the filament might extremely reduce the flow velocity on the wall side of the filament in the transfer path to cause stagnation of the high viscosity resin, leading to difficulty in discharging the filament in a desired arrangement. To overcome this, it is preferable that an inner wall of the transfer path be treated with fluorine or the like having high heat resistance within a region on the downstream side of the heating block 25, that is, in the region to which a temperature of the melting point or more is applied. Forming a releasing layer in the transfer path would reduce the frictional resistance between the molten resin and the inner wall of the transfer path, making it possible to suppress occurrence of stagnation of high viscosity resin.

Moreover, the control unit 100 preferably performs feedforward control in order to prevent control delay in consideration of the time lag of the conveyance in a section from the torsional rotation mechanism 102 to the discharge nozzle 18. For example, the control unit 100 controls driving of the torsional rotation mechanism 102 so that the direction of the filament is switched at the timing when the traveling direction of the discharge module 10 is changed. Furthermore, in a case where the discharge module 10 moves in a curved line, the control unit 100 controls the driving of the torsional rotation mechanism 102 in a stepwise manner in consideration of the time lag.

In another case where the filament is extremely twisted, the filament might be entangled in the path from the reel 4 to an introduction portion of the discharge module 10. It would be very troublesome for the user to unwind this entanglement. Therefore, it is preferable that a guide tube be introduced from the reel 4 to the introduction portion. However, in a case where the filament is extremely twisted, the frictional resistance between the guide tube and the filament is increased, hindering normal introduction of the filament in some cases. This might also cause the filament to be scraped at an orifice portion having a narrow inner diameter such as a joint of a guide tube. Meanwhile, reinforced filaments or the like in which a filler is blended might have lost flexibility peculiar to the resin. Applying a torsional load on such a filament might break the filament, leading to a failure in normal fabrication in some cases.

To avoid these problems, the control unit 100 preferably regulates the cumulative twist amount of the filament to ±180° from a reference angle, for example.

For example, as illustrated in FIGS. 27A and 27B, in place of the mechanism for rotating the filament, it is allowable to adopt a mechanism capable of rotating the whole discharge module 10 so as to arrange the resin in a desired state in the discharged product. In this case, however, a plurality of wiring systems such as the thermocouple 17 for controlling the heat source 16, the wiring of the heat source 16 itself, the wiring of the cooling source 13, and wiring of the overheat protector, etc. is also rotated at the same time, leading to complication from the viewpoint of wiring rather than from the viewpoint of the rotation direction of the filament.

### <<< Modification G of Embodiment >>>

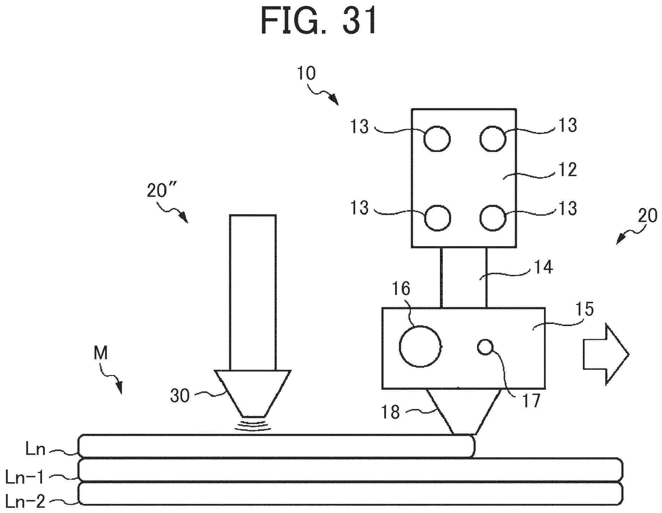

Subsequently, modification G of the embodiment will be described focusing on points different from the above embodiment. FIG. 31 is a schematic view illustrating fabrication and surface treatment operation in an embodiment.

In modification G of the embodiment, the three-dimensional fabricating apparatus 1 includes a heating module 20". The heating module 20" includes a horn 30 that heats and pressurizes the three-dimensional fabrication object M. The three-dimensional fabricating apparatus 1 includes an ultrasonic vibrator. The horn 30 moves downward from above the stacked surface of the three-dimensional fabrication object M by the Z-axis drive motor, and applies pressure to the stacked surface. This configuration transmits the ultrasonic vibration generated by the ultrasonic vibrator to the three-dimensional fabrication object M. Transmission of the ultrasonic vibration to the three-dimensional fabrication object M allows the upper layer Ln and the lower layer Ln-1 of the three-dimensional fabrication object M to be welded and joined with each other. In the three-dimensional fabricating apparatus 1, the number of the horn 30 is not limited to one, and is appropriately selected. In the case where a plurality of horns 30 are provided, the shape of the horn need not be unified, and horns of different shapes may be mounted.

### << Main effects of the embodiments >>

The discharge module 10 (an example of a discharger) of the three-dimensional fabricating apparatus 1 (an example of a fabricating apparatus) of the above embodiment discharges a molten filament (an example of a fabrication material) to form a fabrication material layer. The heating module 20 (an example of heater) of the three-dimensional fabricating apparatus 1 heats the formed fabrication material layer. The discharge module 10 discharges the molten filament to the heated fabrication material layer so as to stack the fabrication material layers to perform fabrication. According to the above embodiment, remelting is performed and the filament is discharged to the fabrication material layer (lower layer) to stack the fabrication material layer (upper layer) so as to mix the materials between the layers. This makes it possible to enhance the strength of the fabrication object in the stacking direction. Furthermore, the processing of stacking the upper layer makes it possible to perform fabrication without affecting the visibility of the outer shape.

The heating module 20 of the three-dimensional fabricating apparatus 1 selectively heats a predetermined region of the fabrication material layer. This makes it possible to perform fabrication while maintaining the shape of the fabrication object.

In particular, the peripheral portion of the shape is excluded from the reheating range, leading to prevention of occurrence of deformation of the outer shape.

Controlling the heating amount according to the shape of the layer to be heated would enable the remelting portion RM to be appropriately melted, leading to enhancement of adhesion between stacked layers. At this time, the outer peripheral portion of the lower layer is not melted, making it possible to degradation of fabrication accuracy due to deformation of the outer shape.

Together with this, setting the reheating range including the outer peripheral portion of the shape would make it possible to obtain uniform stacking strength within identical stacked layers. Although heating the outer peripheral portion might induce the occurrence of deformation of the shape by, this can be solved by performing secondary processing of cutting after completion of fabrication. In the case of an ordinary stacked fabrication object, secondary processing such as cutting would be difficult because of weak strength in the stacking direction. However, remelting including the outer peripheral portion would increase the strength in the outer peripheral portion as the cutting portion by heated remelting, facilitating the secondary processing. Furthermore, the heating amount can be controlled so as not to exceed the carbonization temperature of the fabrication material so as to prevent the occurrence of burning due to excessive heating. This makes it possible to enhance stacking strength by remelting and prevent deterioration in quality, such as poor fabrication and degradation in appearance.

The rotation stage RS (an example of a conveying unit) of the three-dimensional fabricating apparatus 1 conveys the heating module 20 so that it can be heated from different directions with respect to a predetermined position. With this configuration, the heating module 20 can heat the fabrication material layer following the movement of the discharge module 10.

The three-dimensional fabricating apparatus 1 includes the temperature sensor 104 (an example of measuring unit) that measures the temperature of the fabrication material layer heated by the heating module 20. The heating module 20 heats the fabrication material layer according to the temperature measured by the temperature sensor 104. With this configuration, the three-dimensional fabricating apparatus 1 can appropriately reheat the fabrication material layer in accordance with desired characteristics such as inter-layer adhesion strength or fabrication accuracy.

The heating module 20 may be the laser light source 21 (an example of a light emission device) that emits laser light. This enables the heating module 20 to selectively heat the fabrication object without coming in contact with the fabrication object.

The heating module 20 may be a hot air source (an example of blower) for blowing heated air. This enables the heating module 20 to selectively heat the fabrication object without coming in contact with the fabrication object.

The heating module 20' may be the heating plate 28 or the tap nozzle 28' (an example of a member) that comes in contact with and heats the fabrication material layer. This enables the heating module 20' to selectively heat the fabrication object.

The three-dimensional fabricating apparatus 1 may include a plurality of heating modules 20. This enables any of the heating modules 20 to heat the fabrication object even when the scanning direction of the discharge module 10 is changed, leading to reduction of the fabrication time.

The side surface cooler 39 (an example of a cooling unit) of the three-dimensional fabricating apparatus 1 cools the outer peripheral portion of the fabrication object formed by the fabrication material. This enables the three-dimensional fabricating apparatus 1 to perform fabrication while maintaining the shape of the fabrication object.

A plurality of materials having different viscosities is arranged in the filament. This enables the discharge module 10 to discharge the filament to arrange a material having a lower viscosity on the outer peripheral portion under the control of the control unit 100.

The assist mechanism 41 (an example of a support member) of the three-dimensional fabricating apparatus 1 supports the formed fabrication material layer. This makes it possible to perform fabrication while maintaining the shape of the formed fabrication material layer.

## Claims

1. A fabricating apparatus (1) comprising:
a heater (20) configured to heat a first fabrication material layer formed of a fabrication material;
a discharger (10) configured to discharge a molten fabrication material onto the first fabrication material layer heated by the heater (20), to stack a second fabrication material layer on the first fabrication material layer; and
a heating controller (110) configured to control a heating of the heater (20) according to shape data so that the first fabrication material layer does not exceed a threshold temperature defined by the fabrication material when the heater (20) heats the first fabrication material layer.

2. The fabricating apparatus (1) according to claim 1,
wherein the shape data includes shape data of the first fabrication material layer and shape data of the second fabrication material layer, and
wherein the heating controller is configured to control the heating of the heater (20) to heat a range on the first fabrication material layer, including a peripheral portion of the first fabrication material layer, over which the second fabrication material layer is stacked.

3. The fabricating apparatus (1) according to claim 2,
wherein the heating controller (110) is configured to determine a portion for which heating is to be moderated within the range according to shape data of one or more fabrication material layers including the first fabrication material layer below the second fabrication material layer;
wherein the heating controller (110) is configured to obtain position coordinates of a site to be heated by the heater (20), and
wherein the heating controller (110) is configured to control, according to the position coordinates of the site, an intensity of the heater (20) toward the portion for which the heating is to be moderated.

4. The fabricating apparatus (1) according to claim 3,
wherein the circuity (110) is configured to determine at least one of the peripheral portion, a tapered portion, a micro-shape portion, a thin line portion, and a thinned portion of the first fabrication material layer, as the portion for which the heating is to be moderated.

5. The fabricating apparatus (1) according to claim 3, further comprising a temperature sensor (104) to measure a temperature of a position on the first fabrication material layer being heated by the heater (20),
wherein the circuity (110) controls the intensity of the heater so that the temperature measured by the temperature sensor does not exceed the threshold temperature.

6. The fabricating apparatus (1) according to any one of claims 1 to 5,
wherein the threshold temperature is a carbonization temperature of the fabrication material.

7. The fabricating apparatus (1) according to any one of claims 1 to 6,
wherein the circuity (110) is configured to control the heater (20) to heat the first fabrication material layer so that a temperature of at least a region of the first fabrication material layer that contacts the molten fabrication material is a melting temperature of the fabrication material or more.

8. The fabricating apparatus (1) according to any one of claims 1 to 6,
wherein the circuity (110) is configured to change at least one of a drive time per unit time and a drive current of the heater (20) to control a heating intensity of the heater (20).

9. The fabricating apparatus (1) according to any one of claims 1 to 8,
wherein the heater (20) is configured to heat the first fabrication material layer without contacting the first fabrication material layer.

10. The fabricating apparatus (1) according to claim 9,
wherein the heater (20) is a light emission device to emit laser light.

11. A fabrication system comprising the fabricating apparatus (1) according to any one of claims 1 to 10.

12. A fabricating method to be executed by a fabricating apparatus (1), the fabricating method comprising:
preparing, with the fabricating apparatus (1), a first fabrication material layer formed of a fabrication material;
heating the first fabrication material layer with the fabricating apparatus (1); and
discharging, with the fabricating apparatus (1), a molten fabrication material to the first fabrication material layer heated by the heating, to stack a second fabrication material layer on the first fabrication material layer,
the heating including controlling, with the fabricating apparatus (1), the heating according to shape data so that the first fabrication material layer does not exceed a threshold temperature defined by the fabrication material.
